(19)

Europäisches
Patentamt
European
Patent Office
Office européen
des brevets

(11)     **EP 4 148 479 A1**

(12)     **EUROPEAN PATENT APPLICATION**
published in accordance with Art. 153(4) EPC

(43) Date of publication:
**15.03.2023 Bulletin 2023/11**

(21) Application number: **21812534.2**

(22) Date of filing: **25.05.2021**

(51) International Patent Classification (IPC):
**G02B 13/00** (2006.01)     **G02B 17/08** (2006.01)

(52) Cooperative Patent Classification (CPC):
**G02B 13/00; G02B 13/18; G02B 17/06;**
**G02B 17/08**

(86) International application number:
**PCT/CN2021/095889**

(87) International publication number:
**WO 2021/238945 (02.12.2021 Gazette 2021/48)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **29.05.2020   CN 202010482151**

(71) Applicant: **Huawei Technologies Co., Ltd.**
**Longgang District,**
**Shenzhen,**
**Guangdong 518129 (CN)**

(72) Inventors:
• **ZHAO, Shuai**
**Shenzhen, Guangdong 518129 (CN)**
• **JIA, Yuanlin**
**Shenzhen, Guangdong 518129 (CN)**
• **YAO, Xiuwen**
**Shenzhen, Guangdong 518129 (CN)**

(74) Representative: **Epping - Hermann - Fischer**
**Patentanwaltsgesellschaft mbH**
**Schloßschmidstraße 5**
**80639 München (DE)**

(54)     **OPTICAL LENS, LENS MODULE, AND ELECTRONIC DEVICE**

(57)     An optical lens (10), a camera module (100), and an electronic device (1000), where light that enters the optical lens (10) is axially folded by using a reflex optical element in the optical lens (10), so that the optical lens (10) can have a relatively long focal length to achieve a long-range photographing effect, and the optical lens (10) has a relatively short total track length. Therefore, when the optical lens (10) is used in the electronic device (1000), thinning of the electronic device (1000) is not affected. In addition, no prism is required to implement optical path folding in the optical lens (10). In comparison with a optical lens in which a prism is used to perform optical path folding, manufacturing precision and manufacturing costs of the optical lens (10) are relatively low, and the optical lens (10) occupies relatively small space in another direction other than an optical axis direction.

FIG. 3a

## Description

This application claims priority to Chinese Patent Application No. 202010482151.0, filed with the China National Intellectual Property Administration on May 29, 2020, and entitled "OPTICAL LENS, CAMERA MODULE, AND ELECTRONIC DEVICE", which is incorporated herein by reference in its entirety.

## TECHNICAL FIELD

Embodiments of this application relate to the field of lenses, and in particular, to an optical lens, a camera module, and an electronic device.

## BACKGROUND

In recent years, there is an increasingly high requirement on photographing by an electronic device such as a mobile phone, and clear photographing of a distant scene becomes a focus of attention of a user, in other words, there is an increasingly strong requirement for a telephoto lens. However, the telephoto lens usually has a relatively long length, and the length of the lens is an important factor that affects a thickness of the electronic device such as the mobile phone. Therefore, configuration of the telephoto lens is prone to affect thinning of the electronic device.

Currently, most of telephoto lenses on mobile phones are periscope lenses. A glass prism used for bending an optical path is disposed in the periscope lens, so that light that enters the lens is bent in the prism. In this way, telephoto photographing can be implemented, and a length of the telephoto lens can be shortened, to reduce impact of the length of the telephoto lens on thinning of the electronic device. However, a structure such as the glass prism is used in the periscope lens, and consequently there is a relatively high manufacturing precision requirement and relatively high manufacturing costs.

## SUMMARY

This application provides an optical lens, a camera module including the optical lens, and an electronic device including the camera module, to achieve a good imaging effect and obtain an optical lens with a telephoto effect, a relatively short length, a relatively simple manufacturing process, and relatively low costs.

According to a first aspect, this application provides an optical lens. The optical lens includes a plurality of components, and the plurality of components include a first component and a second component arranged from an object side to an image side. The first component has positive focal power, and the second component has negative focal power. Each component includes at least one optical element. Each optical element includes an object-side surface facing the object side and an image-side surface facing the image side. One optical element in the first component is a reflex optical element, and light is reflected in the reflex optical element for several times. All optical elements in the second component are transmissive optical elements. The optical lens meets the following relational expression:

$$0.25 \leq TTL/EFL \leq 0.5,$$

where
TTL is a total track length of the optical lens, EFL is an effective focal length of the optical lens, and TTL/EFL is a telephoto ratio of the optical lens.

In this application, light that enters the optical lens is axially folded by using the reflex optical element in the optical lens, so that a ratio of the total track length of the optical lens to the effective focal length of the optical lens can meet the foregoing relational expression. In this way, the optical lens can have a relatively long focal length to achieve a long-range photographing effect, and the total track length of the optical lens can be reduced. In addition, in this application, no prism needs to be used in the optical lens to implement optical path folding. In comparison with an optical lens in which a prism is used to perform optical path folding, manufacturing precision and manufacturing costs of the optical lens are relatively low. Furthermore, compared with a periscope lens in which a prism is used to perform optical path folding, the optical lens in this application axially folds light by using the reflex optical element. Therefore, the total track length of the optical lens is shortened, and the optical lens occupies relatively small space in another direction.

In some implementations, the optical lens meets the following relational expression:

$$0.3 \leq |f_1/f| \leq 0.8,$$

where

$f_1$ is a focal length of the first component, and f is a total focal length of the optical lens.

A ratio of the focal length of the first component to the total focal length of the optical lens is specified in the foregoing relational expression, in other words, the focal power of the first component and the focal power of the second component in the optical lens are properly allocated to some extent, so that the optical lens can obtain a good long-range photographing effect, and a length of the optical lens can be reduced, to implement a case in which the optical lens is suitable for a thin electronic device. Specifically, in the implementations of this application, the ratio of the focal length of the first component to the total focal length of the optical lens is relatively large, in other words, the first component has relatively high focal power, and is mainly used to increase the focal length of the optical lens, to achieve a better long-range photographing effect. The second component is mainly used to implement a function of field of view correction, so that the optical lens can capture a high-quality image or image.

In some implementations, an object-side surface of the reflex optical element includes a first reflection region and a first transmission region disposed around the first reflection region, an image-side surface includes a second transmission region and a second reflection region surrounding the second transmission region, a projection of the first transmission region on the image-side surface in an optical axis direction is located in the second reflection region, and light is incident through the first transmission region, then reflected in the second reflection region and reflected in the first reflection region, and then emitted from the second transmission region.

In the implementations, the first reflection region is disposed on the object-side surface of the reflex optical element, and the second reflection region is disposed on the image-side surface, so that light can be reflected in both the first reflection region and the second reflection region, in other words, the light can be folded for two times in the reflex optical element. Therefore, a desired light direction adjustment effect is obtained to implement a long focal length of the optical lens, and a thickness of the optical element in the optical lens is reduced, to reduce the length of the optical lens.

In some implementations, the first reflection region is a concave freeform surface bent towards the second emission region, and both the second reflection region and the second transmission region are convex freeform surfaces protruding in a direction away from the first reflection region, to ensure that light reflected in the second reflection region can be reflected to the first reflection region, and light reflected in the first reflection region can be emitted through the second transmission region, so as to meet a specified requirement.

In some implementations, the optical lens meets the following relational expression:

$$0.25 \leq OBS \leq 0.5,$$

where OBS is a ratio of a diameter of the first reflection region to a diameter of the object-side surface of the reflex optical element.

The ratio of the diameter of the first reflection region to the diameter of the object-side surface of the reflex optical element is specified in the foregoing relational expression, in other words, sizes of the first reflection region and the first transmission region of the reflex optical element are enabled to fall within a specific range, to ensure light that enters the first component and an amount of light that is emitted from the first component and that enters the second component, so as to ensure a light flux in the optical lens and ensure an imaging effect of the optical lens.

In some implementations, the second component includes at least two optical elements. The at least two optical elements cooperate with each other to achieve a better field of view correction effect, so that the optical lens can obtain a higher-quality image. In some implementations, both an object-side surface and an image-side surface of each optical element in the second component are aspheric surfaces, in other words, there is a higher degree of freedom in designing the object-side surface and the image-side surface of each optical element in the second component, so that a desired effect is more conveniently obtained through design. In some implementations, an object-side surface and an image-side surface of the optical element in the first component may also be freeform surfaces.

In some implementations, a diameter of an optical element with a largest diameter in the optical lens ranges from 7 mm to 10 mm, so that a design requirement is met to implement an optical lens with a relatively long focal length and a relatively short optical length, and a size of the optical lens in a radial direction (namely, a direction perpendicular to an optical axis direction) is reduced as much as possible, to reduce space occupied by the optical lens.

In some implementations, the optical lens meets the following relational expression:

$$0.05 \leq IH/EFL \leq 0.15,$$

where IH is a maximum image height of the optical lens, and EFL is the effective focal length of the optical lens. In the implementations of this application, it is specified that a ratio of the image height of the optical lens to the effective focal length of the optical lens meets the foregoing relational expression, to ensure that the optical lens has a relatively large image height, so that the optical lens can have relatively good imaging quality.

According to a second aspect, this application further provides a camera module. The camera module includes a photosensitive element and the foregoing optical lens. The photosensitive element is located on an image side of the optical lens, and is located on a focal plane of the optical lens. The photosensitive element can convert an optical signal of an image obtained by the optical lens into an electrical signal, to facilitate further processing of the image obtained by the optical lens, so as to obtain an image with relatively good quality. In addition, in this application, the optical lens can have a relatively long focal length to achieve a long-range photographing effect, and have a relatively short total track length, and manufacturing precision and manufacturing costs of the optical lens are relatively low. Therefore, the camera module in this application can achieve a relatively good long-range photographing effect, and has a relatively short total track length, to be better applied to a thin electronic device, and manufacturing precision and manufacturing costs of the camera module can be relatively low.

According to a third aspect, this application provides an electronic device. The electronic device includes a housing and the foregoing camera module. An optical axis of the camera module is the same as a thickness direction of the electronic device. In this application, the camera module has a relatively good long-range photographing effect and has a relatively short total track length. Therefore, the electronic device including the camera module has a relatively good long-range photographing effect. In addition, the camera module has a relatively short total track length, and the optical axis direction of the camera module is the same as the thickness direction of the electronic device, and therefore the electronic device in this application may be manufactured with a smaller thickness, so that the electronic device can be thinned while having a long-range photographing effect. Furthermore, manufacturing precision and manufacturing costs of the camera module are relatively low, and therefore manufacturing costs of the electronic device in this application may also be relatively low.

**BRIEF DESCRIPTION OF DRAWINGS**

FIG. 1 is a schematic diagram of a structure of an electronic device according to this application;
FIG. 2 is a schematic diagram of a structure of another electronic device according to this application;
FIG. 3a is a schematic exploded view of a camera module according to an embodiment of this application;
FIG. 3b is a schematic diagram of a structure of a camera module according to an embodiment of this application;
FIG. 4 is a cross-sectional schematic view of a reflex optical element in an implementation shown in FIG. 3a;
FIG. 5 is a schematic diagram of a partial structure of an optical lens according to a first embodiment of this application;
FIG. 6 is a schematic diagram of axial aberrations that exist after light whose wavelengths are respectively 650 nm, 610 nm, 555 nm, 510 nm, and 470 nm passes through an optical lens in a first embodiment;
FIG. 7 is a schematic diagram of field curvature and optical distortion that exist after light whose wavelength is 555 nm passes through an optical lens in a first embodiment;
FIG. 8 is a schematic diagram of lateral chromatic aberrations that are at different image height positions and that exist after light of different wavelengths passes through an optical lens 10 in a first embodiment;
FIG. 9 shows a distribution curve of relative illumination on an image plane of an optical lens in a first embodiment;
FIG. 10 is a schematic diagram of a partial structure of an optical lens according to a second embodiment of this application;
FIG. 11 is a schematic diagram of axial aberrations that exist after light whose wavelengths are respectively 650 nm, 610 nm, 555 nm, 510 nm, and 470 nm passes through an optical lens in a second embodiment;
FIG. 12 is a schematic diagram of field curvature and optical distortion that exist after light whose wavelengths are respectively 650 nm, 610 nm, 555 nm, 510 nm, and 470 nm passes through an optical lens in a second embodiment;
FIG. 13 is a schematic diagram of lateral chromatic aberrations that are at different image height positions and that exist after light of different wavelengths passes through an optical lens in a second embodiment;
FIG. 14 shows a distribution curve of relative illumination on an image plane of an optical lens in a second embodiment;
FIG. 15 is a schematic diagram of a partial structure of an optical lens according to a third embodiment of this application;
FIG. 16 is a schematic diagram of axial aberrations that exist after light whose wavelengths are respectively 650 nm, 610 nm, 555 nm, 510 nm, and 470 nm passes through an optical lens in a third embodiment;
FIG. 17 is a schematic diagram of field curvature and optical distortion that exist after light whose wavelengths are respectively 650 nm, 610 nm, 555 nm, 510 nm, and 470 nm passes through an optical lens in a third embodiment;
FIG. 18 is a schematic diagram of lateral chromatic aberrations that are at different image height positions and that exist after light of different wavelengths passes through an optical lens in a third embodiment;
FIG. 19 shows a distribution curve of relative illumination on an image plane of an optical lens in a third embodiment;

FIG. 20 is a schematic diagram of a partial structure of an optical lens according to a fourth embodiment of this application;

FIG. 21 is a schematic diagram of axial aberrations that exist after light whose wavelengths are respectively 650 nm, 610 nm, 555 nm, 510 nm, and 470 nm passes through an optical lens in a fourth embodiment;

FIG. 22 is a schematic diagram of field curvature and optical distortion that exist after light whose wavelengths are respectively 650 nm, 610 nm, 555 nm, 510 nm, and 470 nm passes through an optical lens in a fourth embodiment;

FIG. 23 shows lateral chromatic aberrations that are at different image height positions and that exist after light of different wavelengths passes through an optical lens in a fourth implementation;

FIG. 24 shows a distribution curve of relative illumination on an image plane of an optical lens in a fourth embodiment;

FIG. 25 is a schematic diagram of a partial structure of an optical lens according to a fifth embodiment of this application;

FIG. 26 is a schematic diagram of axial aberrations that exist after light whose wavelengths are respectively 650 nm, 610 nm, 555 nm, 510 nm, and 470 nm passes through an optical lens in a fifth embodiment;

FIG. 27 is a schematic diagram of field curvature and optical distortion that exist after light whose wavelengths are respectively 650 nm, 610 nm, 555 nm, 510 nm, and 470 nm passes through an optical lens in a fifth embodiment;

FIG. 28 is a schematic diagram of lateral chromatic aberrations that are at different image height positions and that exist after light of different wavelengths passes through an optical lens in a fifth implementation; and

FIG. 29 shows a distribution curve of relative illumination on an image plane of an optical lens in a fifth embodiment.

## DESCRIPTION OF EMBODIMENTS

The following describes technical solutions of embodiments in this application with reference to accompanying drawings.

For ease of understanding, technical terms in this application are first explained and described below.

A focal length (focal length, f) is also referred to as a focal length, is a measure of convergence or divergence of light in an optical system, and refers to a vertical distance that is between an optical center of an optical element or an optical element group and an imaging plane and that exists when a clear image of an infinitely distant object is formed on the imaging plane through the optical element or the optical element group. For a thin transmissive optical element, the focal length is a distance between a center of the transmissive optical element and an imaging plane. For a thick optical element or optical element group, the focal length is equal to an effective focal length (effective focal length, EFL), namely, a distance between a rear principal plane of the optical element or optical element group and an imaging plane.

An aperture is an apparatus used to control an amount of light that passes through a lens and that enters a photosensitive surface of a machine body. The aperture is usually located in the lens. A size of the aperture is expressed by an f-number.

An aperture f-number is a relative value (a reciprocal of a relative aperture) obtained by dividing a focal length of a lens by a diameter that is of the lens and that is used for allowing light to pass through. A smaller aperture f-number indicates a larger amount of light that enters in a same unit time. A larger aperture f-number indicates a smaller depth of field, and background content of photographing is blurred, which is similar to an effect of a telephoto lens. A back focal length (Back Focal Length, BFL) is a distance between an optical element closest to an image side in an optical lens and an imaging plane of the optical lens.

Positive focal power may also be referred to as positive focal power, and indicates that an optical element has a positive focal length, and has an effect of converging light.

Negative focal power may also be referred to as negative focal power, and indicates that an optical element has a negative focal length, and has an effect of diverging light.

A total track length (total track length, TTL) is a total length from an object-side surface of an optical element closest to an object side in an optical lens to an imaging plane, and is a major factor that forms a height of a camera.

An Abbe number is a dispersion coefficient, is a difference ratio of refractive indices of an optical material at different wavelengths, and represents a dispersion degree of the material.

In an optical instrument, an angle that is formed by using a lens in the optical instrument as a vertex and by using two edges of a maximum range in which an objective image of a to-be-measured object may pass through the lens is referred to as a field of view (field of view, FOV). A field of view range of the optical instrument is determined based on the field of view. A larger field of view indicates a wider field of view range and lower optical power.

An optical axis is light that vertically passes through a center of an ideal optical element. When light parallel to the optical axis is incident into a convex optical element, an ideal convex optical element should converge all the light at one point behind the optical element, and this point at which all the light converges is a focal point. When light propagates along the optical axis, a transmission direction of the light does not change.

An object side is a side on which a to-be-imaged scene is located and that exists when an optical element is used as a boundary.

An image side is a side on which an image of a to-be-imaged scene is located and that exists when an optical element is used as a boundary.

An object-side surface is a surface that is of an optical element and that is close to an object side.

An image-side surface is a surface that is of an optical element and that is close to an image side.

An optical element is used as a boundary, and in this case, a side on which a to-be-photographed object is located is the object side, and a surface that is of the optical element and that is close to the object side may be referred to as the object-side surface. An optical element is used as a boundary, and in this case, a side on which an image of a to-be-photographed object is located is the image side, and a surface that is of the optical element and that is close to the image side may be referred to as the image-side surface.

An axial chromatic aberration is also referred to as a longitudinal chromatic aberration, a chromatic aberration of position, or an axial aberration. Abeam of light parallel to an optical axis converges at different positions after passing through a lens. This aberration is referred to as the chromatic aberration of position or the axial chromatic aberration. This is because the lens images light of various wavelengths at different positions, and consequently imaging planes of images of light in different colors cannot overlap during final imaging, and polychromatic light disperses to form dispersion.

A lateral chromatic aberration is also referred to as a chromatic aberration of magnification. A difference in magnification of an optical system for light in different colors is referred to as the chromatic aberration of magnification. The magnification of the optical system changes with a wavelength, and a size of an image changes accordingly.

Distortion (distortion) is also referred to as distortion, and refers to a degree of distortion, relative to an object, of an image of the object that is formed by using an optical system. The distortion is caused due to the fact that due to impact of a stop spherical aberration, after chief rays of different fields of view pass through the optical system, a height of an intersection point on a Gaussian image plane is not equal to an ideal image height, and a difference between the height and the ideal image height is the distortion. Therefore, the distortion changes only an imaging position of an extra-axial object point on an ideal plane. Consequently, a shape of an image is distorted, but definition of the image is not affected.

Optical distortion (optical distortion) refers to a degree of deformation calculated by using an optical theory.

A diffraction limit (diffraction limit) means that when an ideal object point is imaged by using an optical system, due to limitation of diffraction, an ideal image point cannot be obtained, but a Fraunhofer diffraction image is obtained. The optical system usually has a circular aperture, and therefore the Fraunhofer diffraction image is an Airy disk. In this way, an image of each object point is a diffuse spot, and it is difficult to distinguish between two diffuse spots after the two diffuse spots approach each other, which limits resolution of the system. A larger size of the spot indicates lower resolution.

An axial thickness (TTL 1) of a plurality of optical elements refers to a distance between an intersection point of an axis of an optical lens and an object-side surface of a first optical element and an intersection point of the axis of the optical lens and an image-side surface of a last optical element.

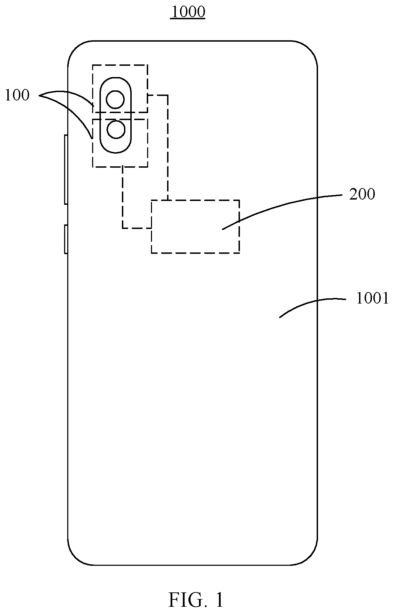

This application provides an electronic device. The electronic device may be a mobile phone, a smartphone, a tablet computer, a laptop computer, a video camera, a video recorder, a camera, or a device that is in another form and that has a photographing or video recording function. The electronic device includes at least one optical lens, and the optical lens includes a telephoto lens, so that the electronic device can achieve a relatively good long-range photographing effect. FIG. 1 is a schematic diagram of an electronic device 1000 according to an embodiment of this application. In this embodiment, the electronic device 1000 is a mobile phone. In this application, description is provided by using an example in which the electronic device 1000 is a mobile phone.

The electronic device 1000 includes a camera module 100 and an image processing module 200 communicatively connected to the camera module 100. The camera module 100 is configured to: obtain image data, and input the image data to the image processing module 200, so that the image processing module 200 processes the image data. The camera module 100 and the image processing module 200 may be communicatively connected by performing data transmission in an electrical connection manner such as wire routing, or may implement data transmission in a manner such as coupling. It may be understood that the camera module 100 and the image processing module 200 may alternatively be communicatively connected in another manner in which data transmission can be implemented.

A function of the image processing module 200 is to optimize a digital image signal by using a series of complex mathematical algorithm operations, and finally transfer the processed signal to a display for display. The image processing module 200 may be an image processing chip, a digital signal processing chip (DSP), or the like. Afunction of the digital signal processing chip is to quickly transfer, in a timely manner, data obtained by a photosensitive chip of the camera module 100 to a central processing unit and refresh the photosensitive chip. Therefore, quality of the DSP chip directly affects picture quality (for example, color saturation and definition).

In the embodiment shown in FIG. 1, the camera module 100 is disposed on a back of the electronic device 1000, and is a rear-facing camera of the electronic device 1000. It may be understood that in some embodiments, the camera module 100 may alternatively be disposed on a front of the electronic device 1000, and is used as a front-facing camera of the electronic device 1000. Both the front-facing camera and the rear-facing camera may be used to take a selfie, and may be further used by a photographer to photograph another object.

In this application, the electronic device 1000 includes a housing 1001, and the camera module 100 is disposed in the housing 1001. Specifically, a hole is disposed on the housing 1001. When the camera module 100 is disposed in the housing 1001, one end of the camera module 100 is disposed in the hole, to ensure that light outside the electronic device 1000 can enter the camera module 100, so as to photograph a scene. In this implementation, the housing 1001 includes a rear cover plate, and the hole is disposed on the rear cover plate, so that the camera module 100 can be used as the rear-facing camera of the electronic device 100.

In this application, an optical axis direction of the camera module 100 is the same as a thickness direction of the electronic device 1000. That is, in this application, the optical axis direction of the camera module 100 is a straight line direction, which is different from a fold line presented after an optical axis of a periscope lens is changed by using a prism. Therefore, a length of the camera module 100 is an important factor that affects a thickness of the electronic device 1000, and the camera module 100 does not occupy excessive space of the electronic device 1000 in another direction.

In some embodiments, there are a plurality of camera modules 100, and "a plurality of" means two or more. Different camera modules 100 may have different functions, to meet different photographing scenarios. For example, in some implementations, the plurality of camera modules include a telephoto camera module or a wide-angle camera module, to respectively implement functions of telephoto photographing and wide-angle photographing. In the embodiment shown in FIG. 1, the electronic device 1000 includes two rear-facing cameras, and the two camera modules 100 are respectively a common camera module and a telephoto camera module. The common camera module can be applied to routine common photographing, and the telephoto camera module can be used to clearly photograph a distant scene. In some implementations, all of the plurality of different camera modules 100 may be communicatively connected to the image processing module 200, to process, by using the image processing module 200, image data obtained by each camera module 100 through photographing.

It should be understood that a position at which the camera module 100 in the electronic device 1000 in the embodiment shown in FIG. 1 is installed is merely an example. In some other embodiments, the camera module 100 may alternatively be installed at another position on the mobile phone. For example, the camera module 100 may be installed in a middle of an upper part or an upper right corner of the back of the mobile phone. Alternatively, the camera module 100 may not be disposed on a main body of the mobile phone, but may be disposed on a component that is movable or rotatable relative to the mobile phone. For example, the component may extend, retract, or rotate from the main body of the mobile phone. The position at which the camera module 100 is installed is not limited in this application.

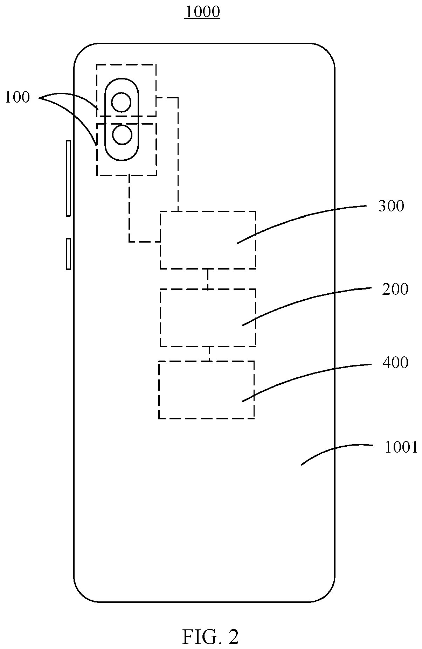

FIG. 2 is a schematic diagram of a structure of another electronic device according to this application. In some embodiments, the electronic device 1000 further includes an analog-to-digital converter (which may also be referred to as an A/D converter) 300. The analog-to-digital conversion module 300 is connected between the camera module 100 and the image processing module 200. The analog-to-digital conversion module 300 is configured to: convert a signal generated by the camera module 100 into a digital image signal, transmit the digital image signal to the image processing module 200, process the digital image signal by using the image processing module 200, and display an image or an image by using a display screen or the display.

In some embodiments, the electronic device 1000 further includes a memory 400. The memory 400 is communicatively connected to the image processing module 200. After processing the digital image signal, the image processing module 200 transmits the image to the memory 400, so that when the image needs to be viewed subsequently, the image can be found from the memory at any time and displayed on the display screen. In some embodiments, the image processing module 200 further compresses the processed digital image signal, and then stores the processed digital image signal in the memory 400, to save space of the memory 400. It should be noted that FIG. 2 is merely a schematic diagram of a structure according to an embodiment of this application. Positions, structures, and the like that are shown in FIG. 2 and that are of the camera module 100, the image processing module 200, the analog-to-digital conversion module 300, and the memory 400 are merely examples.

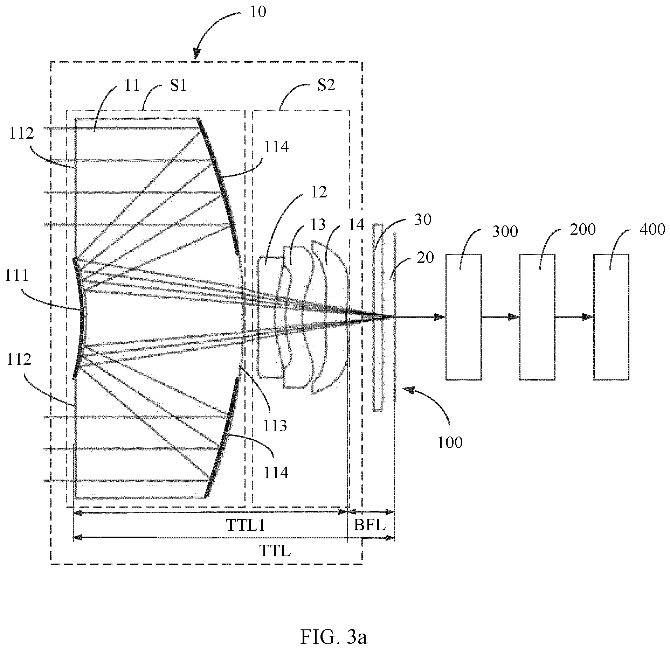

FIG. 3a is a schematic exploded view of the camera module 100 according to an embodiment of this application. The camera module 100 includes an optical lens 10 and a photosensitive element 20. The photosensitive element 20 is located on an image side of the optical lens 10, and when the camera module 100 works, a to-be-imaged scene passes through the optical lens 10, and then is imaged on the photosensitive element 20. Specifically, a working principle of the camera module 100 is as follows: Light reflected by a to-be-photographed scene passes through the optical lens 10 to generate an optical image, and the optical image is projected onto a surface of the photosensitive element 20. The photosensitive element 20 converts the optical image into an electrical signal, namely, an analog image signal, and transmits the analog image signal obtained through conversion to the analog-to-digital conversion module 300, to convert the analog image signal into a digital image signal by using the analog-to-digital conversion module 300 for transmission to the image processing module 200.

The photosensitive element 20 is a semiconductor chip, and the surface includes hundreds of thousands to millions of photodiodes. When being irradiated by light, the photosensitive element 20 generates an electric charge, and performs conversion into a digital signal by using the analog-to-digital conversion module 300. The photosensitive element 20 may be a charge coupled device (charge coupled device, CCD) or a complementary metal-oxide semiconductor (complementary metal-oxide semiconductor, CMOS). The charge coupled device CCD, namely, the photosensitive element 20, is made of a semiconductor material with high sensitivity, and can convert light into an electric charge, and perform conversion into a digital signal by using the analog-to-digital conversion module 300. The CCD includes many photosensitive units, usually in megapixels. When a surface of the CCD is irradiated by light, each photosensitive unit converts an optical signal that irradiates the photosensitive unit into an electrical signal, and signals generated by all the photosensitive units are added to form a complete picture. The complementary metal-oxide semiconductor CMOS is mainly a semiconductor made of silicon and germanium, so that an N-type (negatively charged) semiconductor and a P-type (positively charged) semiconductor coexist on the CMOS. Currents generated by the two complementary effects may be recorded and interpreted as an image by a processing chip.

The optical lens 10 affects imaging quality and an imaging effect. A clear image is formed on an imaging plane after light of a scene passes through the optical lens 10, and the image of the scene is recorded by the photosensitive element 20 located on the imaging plane. The imaging plane is a plane on which an image obtained after a scene is imaged by using the optical lens 10 is located. In this application, the optical lens 10 includes a plurality of components arranged from an object side to the image side. Each component includes at least one optical element, and optical elements in all the components are coaxially disposed. The optical elements in all the components cooperate with each other to form an image with a relatively good imaging effect. The object side is a side on which a to-be-photographed scene is located, and the image side is a side on which the imaging plane is located.

In this application, the optical lens 10 may be a fixed-focus lens or a zoom lens. The fixed-focus lens means that the optical element in each component is at a relatively fixed position, to ensure that a focal length of the optical lens 10 is fixed. The zoom lens means that optical elements in each component or optical elements in components can move relative to each other, and relative positions of different optical elements are changed, to change the focal length of the optical lens 10.

In some embodiments, the optical lens 10 can be axially moved relative to the photosensitive element 20, so that the optical lens 10 approaches or moves away from the photosensitive element 20. When the optical lens 10 is a zoom lens and the focal length of the optical lens 10 is changed, the optical lens 10 is correspondingly axially moved relative to the photosensitive element 20, so that the photosensitive element 20 can always be located on the imaging plane of the optical lens, to ensure that the optical lens 10 can well perform imaging at any focal length. It may be understood that in some implementations, when a distance between the optical elements in the optical lens 10 is changed to change the focal length of the optical lens 10, a distance between the optical element in the optical lens 10 and the photosensitive element 20 may also be changed, so that the photosensitive element 20 is located on the imaging plane of the optical lens 10. In this case, a distance between the optical lens 10 and the photosensitive element 20 may be unchanged.

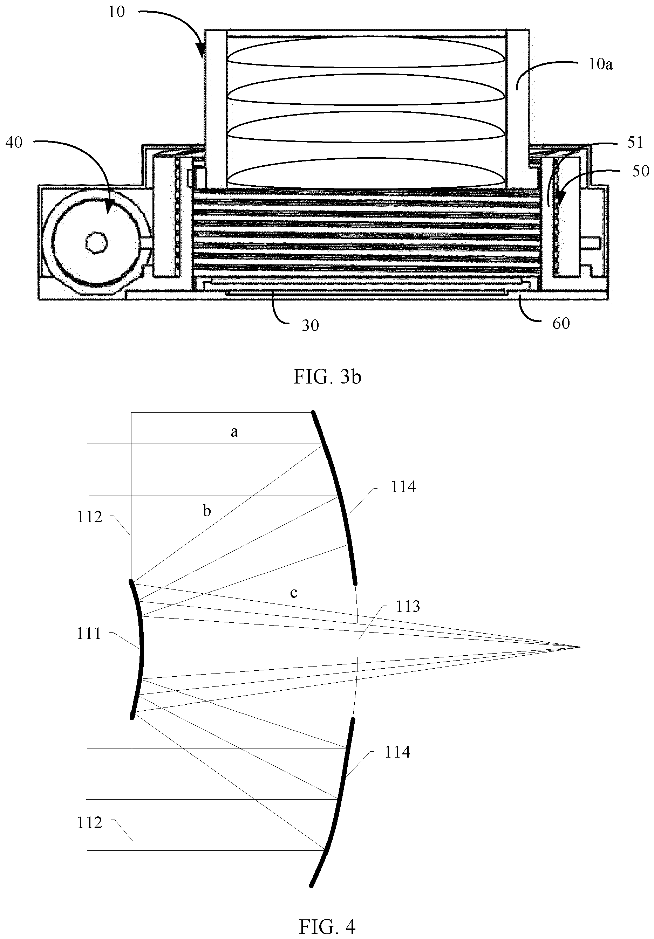

FIG. 3b is a schematic diagram of a structure of the camera module 100 according to an embodiment of this application. In this embodiment, the camera module 100 further includes structures such as a fastening base 50 (holder), an infrared filter 30, and a circuit board 60. The optical lens 10 further includes a lens barrel 10a. The optical elements in all the components in the optical lens 10 are fastened in the lens barrel 10a, and the optical elements fastened in the lens barrel 10a are coaxially disposed.

The photosensitive element 20 is fastened to the circuit board 60 through bonding, patching, or the like, and the analog-to-digital conversion module 300, the image processing module 200, the memory 400, and the like are also fastened to the circuit board 60 through bonding, patching, or the like, so that the photosensitive element 20, the analog-to-digital conversion module 300, the image processing module 200, the memory 400, and the like are communicatively connected by using the circuit board 60. In some embodiments, the fastening base is fastened to the circuit board 60. The circuit board 60 may be a flexible printed circuit (flexible printed circuit, FPC) or a printed circuit board (printed circuit board, PCB), and is configured to transmit an electrical signal. The FPC may be a single-sided flexible board, a double-sided flexible board, a multi-layer flexible board, a rigid flexible board, a flexible printed circuit with a hybrid structure, or the like. Other elements included in the camera module 100 are not described one by one in detail herein.

In some implementations, the infrared filter 30 may be fastened to the circuit board 60, and located between the optical lens 10 and the photosensitive element 20. Light that passes through the optical lens 10 irradiates the infrared filter 30, and is transmitted to the photosensitive element 20 by using the infrared filter 30. The infrared filter may eliminate unnecessary light projected onto the photosensitive element 20, and prevent the photosensitive element 20 from producing a false color or a ripple, to improve effective resolution and color reproduction of the photosensitive element 20. In some embodiments, the infrared filter 30 may alternatively be fastened to an end that is of the optical lens 10 and that faces the image side.

In some embodiments, the fastening base 50 is fastened to the circuit board 60, all of the optical lens 10, the infrared filter 30, and the photosensitive element 20 are accommodated in the fastening base 50, and the photosensitive element 20, the infrared filter 30, and the optical lens 10 are sequentially stacked on the circuit board 60, so that the light that passes through the optical lens 10 can irradiate the infrared filter 30, and can be transmitted to the photosensitive element 20 by using the infrared filter 30. The lens barrel 10a of the optical lens 10 is connected to the fastening base 50, and can be moved relative to the fastening base 50, to change the distance between the optical lens 10 and the photosensitive element 20. Specifically, in some embodiments of this application, the fastening base 50 includes a fastening barrel 51. An internal thread is disposed on an inner wall of the fastening barrel 51, an external thread is disposed on an outer wall of the lens barrel 10a, and the lens barrel 10a is threaded with the fastening barrel 51. A drive member of a drive part 40 drives the lens barrel 10a to rotate, so that the lens barrel 10a is moved in an axial direction relative to the fastening barrel 51, and accordingly the optical element in the optical lens 10 approaches or moves away from the photosensitive element 20. It may be understood that the lens barrel 10a may alternatively be connected to the fastening base 50 in another manner, and moved relative to the fastening base 50. For example, the lens barrel 10a is connected to the fastening base 50 by using a slide. In some embodiments, each optical element in the optical lens 10 is disposed in the lens barrel 10a, and can be moved relative to the lens barrel 10a, so that different optical elements can be moved relative to each other, to perform focus adjustment.

Further referring to FIG. 3a, in this application, the plurality of components in the optical lens 10 include a first component S1 and a second component S2 sequentially arranged from the object side to the image side. The optical elements in all the components are coaxially disposed, and axes of the optical elements in all the components are a straight line, in other words, the optical elements are arranged in a same direction. In this application, a position of the axes of the optical elements in all the components is the optical axis direction of the camera module 100. Therefore, the optical elements in all the components in this application are arranged in the thickness direction of the electronic device 1000. Each optical element includes an object-side surface facing the object side and an image-side surface facing the image side. It may be understood that each optical element in this application is an optical element having positive focal power or negative focal power. When a plane mirror is inserted between optical elements, the plane mirror is not considered as an optical element in the optical lens 10 in this application. For example, the first component S1 includes two optical elements: a first optical element and a second optical element. When a plane mirror is inserted between the first optical element and the second optical element, it cannot be considered that the first component S1 includes three optical elements, and the plane mirror cannot be considered as a third optical element in the first component S1.

In this application, the first component S1 has positive focal power, and the second component S2 has negative focal power, so that an optical lens 10 with a relatively good long-range photographing effect is obtained through matching of optical angles of the first component S1 and the second component S2. In this application, one optical element in the first component S1 is a reflex optical element, and light can be reflected for several times in the reflex optical element. Light that enters the optical lens 10 is axially folded by using the reflex optical element, so that the optical lens 10 can have a relatively long focal length to achieve a long-range photographing effect, and a total track length of the optical lens 10 can be reduced.

FIG. 4 is a cross-sectional schematic view of the reflex optical element in the implementation shown in FIG. 3a. In this implementation, an object-side surface of the reflex optical element includes a first reflection region 111 and a first transmission region 112 disposed around the first reflection region 111. An image-side surface includes a second transmission region 113 and a second reflection region 114 surrounding the second transmission region 113. A projection of the first transmission region 112 on the image-side surface in the optical axis direction is located in the second reflection region 114. Light can be emitted from the first transmission region 112 and the second transmission region 113, and can be reflected in the first reflection region 111 and the second reflection region 114. Specifically, in some implementations, a reflective film layer is formed in a region that is on the object-side surface and that corresponds to the first reflection region 111, so that light can be reflected in the first reflection region 111. A reflective film layer is formed in a region that is on the image-side surface and that corresponds to the second reflection region 114, so that light can be reflected in the second reflection region 114. The reflective film layer may be formed in a manner such as coating, sputtering, or vapor deposition, or by directly attaching a reflective film.

Light is incident through the first transmission region 112, and then irradiates the second reflection region 114 along an optical path a, then the light is reflected in the second reflection region 114, and then irradiates the first reflection region 111 along an optical path b, and then the light is reflected in the first reflection region 111, and then irradiates a second projection region along an optical path c, and is emitted from the second projection region. In other words, in this implementation, the light can be folded for two times by using the reflex optical element, to form optical elements respectively irradiated along the optical path a, the optical path b, and the optical path c. Usually, when all optical elements in the first component S 1 are transmissive optical elements, at least three optical elements are required for the first component S1 to achieve a desired light refraction effect to obtain a desired optical lens 10 with a long focal length. Light is respectively transmitted in a direction of the optical path a, a direction of the optical path b, and a direction of the optical path c in the three optical elements, so that the light is emitted from the first component S 1 at a desired angle by using the three optical elements in the first component S 1. However, in this implementation of this application, an effect achieved by three optical elements can be achieved by using one reflex optical element. Therefore, the optical lens 10 achieves a desired long-range photographing effect, and an axial thickness TTL 1 of a plurality of optical elements in the optical lens 10 is relatively small. The total track length TTL of the optical lens 10 is a sum of a back focal length BFL of the optical lens 10 and the axial thickness TTL 1 of the plurality of optical elements in the optical lens 10. When there is a same long-range photographing effect of the optical lens 10, there is a basically same back focal length BFL of the optical lens 10. In this application, light is folded for a plurality of times by using the reflex optical element, and therefore the axial thickness TTL 1 of the plurality of optical elements can be relatively small, and further the optical lens 10 has a relatively short total track length, and can be more suitable for a thin electronic device. In addition, in this application, light that enters the optical lens 10 is axially folded by using the reflex optical element, and no prism is required to implement optical path folding. In comparison with a periscope lens in which a prism is used to perform optical path folding, manufacturing precision and manufacturing costs of the optical lens 10 are relatively low. Furthermore, compared with the periscope lens in which a prism is used to perform optical path folding, the optical lens 10 in this application axially folds light by using the reflex optical element. Therefore, the total track length of the optical lens 10 is shortened, and the optical lens 10 occupies relatively small space in another direction.

In some implementations, the reflex optical element in the first component S 1 may alternatively be a transmissive optical element, and the first component S1 includes the reflex optical element and reflectors located on the object-side surface and the image-side surface of the reflex optical element. Light is incident from the object-side surface of the reflex optical element, and then emitted from the image-side surface and reflected by the reflector located on the image side. After being reflected by the reflector located on the image side, the light is incident from the image-side surface of the reflex optical element and emitted from the object-side surface, and then irradiates the reflector located on the object side. Then, after being reflected by the reflector located on the object side, the light is incident into the reflex optical element again, to reflect the light in the reflex optical element for a plurality of times. Therefore, the optical lens 10 achieves a relatively good long-range photographing effect, and has a relatively short total track length. In some implementations of this application, the optical lens 10 meets the following relational expression:

$$0.25 \leq OBS \leq 0.5,$$

where

OBS is a ratio of a diameter of the first reflection region 111 to a diameter of the object-side surface of the reflex optical element.

The ratio of the diameter of the first reflection region 111 to the diameter of the object-side surface of the reflex optical element is specified in the foregoing relational expression, in other words, sizes of the first reflection region 111 and the first transmission region 112 of the reflex optical element are enabled to fall within a specific range, to ensure light that enters the first component S1 and an amount of light that is emitted from the first component S1 and that enters the second component S2, so as to ensure a light flux in the optical lens 10 and ensure an imaging effect of the optical lens 10.

In some implementations, the first reflection region 111 is a concave freeform surface bent towards the second emission region, and both the second reflection region 114 and the second transmission region 113 are convex freeform surfaces protruding in a direction away from the first reflection region 111, to ensure that light that enters from the first transmission region 112 can be reflected in the second reflection region 114, then irradiates the first reflection region 111, then is reflected in the first reflection region 111, and then is emitted from the second transmission region 113, so as to meet a specified requirement. In addition, the focal power of the first component S1 can be adjusted by adjusting curvature of the first reflection region 111, the second reflection region 114, and the second transmission region 113, to obtain an optical lens 10 with a relatively good long-range photographing effect and reduce the total track length of the optical lens 10 as much as possible. It may be understood that in another implementation of this application, the first transmission region 112, the first reflection region 111, the second reflection region 114, and the second transmission region 113 of the optical lens 10 may alternatively be in other shapes.

In some implementations of this application, the optical lens 10 meets the following relational expression:

$$0.25 \leq TTL/EFL \leq 0.5,$$

where

TTL is the total track length of the optical lens 10, EFL is an effective focal length of the optical lens 10, and TTL/EFL is a telephoto ratio of the optical lens 10. It should be noted that in this application, EFL, TTL, and TTL/EFL that appear at various positions represent same meanings, and details are not described when EFL, TTL, or TTL/EFL subsequently appears.

In this embodiment of this application, when the effective focal length (EFL) and the total track length (Total Track Length, TTL) of the optical lens 10 meet the foregoing relational expression, the optical lens 10 has a relatively long effective focal length and a relatively short total track length, in other words, the optical lens 10 can achieve a relatively good long-range photographing effect, and has a relatively short length, and can be more suitable for application to the electronic device 1000 for which there is a thinning requirement, for example, a mobile phone. In this application, an optical axis of the optical lens 10 is an optical axis of the camera module 100. The optical axis of the optical lens 10 is a center line of the optical lens 10. After light incident into the optical axis of the optical lens 10 is transmitted along the optical axis, a direction does not change. In this application, an optical axis direction of the optical lens 10 is the same as the thickness direction of the electronic device 1000, and therefore the length of the optical lens 10 is an important factor that affects the thickness of the electronic device 1000. Therefore, when the optical lens 10 has a relatively short length, the electronic device 1000 may have a relatively small thickness, to meet a current thinning requirement for the electronic device 1000. In some implementations of this application, the electronic device 1000 is a type of electronic product such as a mobile phone, a tablet, a camera, or a notebook computer, and includes a display screen. The thickness direction of the electronic device 1000 is perpendicular to a direction of the display screen.

It may be understood that in some other implementations of this application, TTL/EFL may be slightly less than 0.25, for example, 0.23 or 0.2; or TTL/EFL may be slightly greater than 0.5, for example, 0.55 or 0.6.

In some embodiments of this application, each optical element in the optical lens 10 may be made of a plastic material, a glass material, or another composite material. Various optical element structures in complex shapes can be easily made by using the plastic material. A refractive index n1 of an optical element made of the glass material meets the following relational expression: $1.50 \leq n1 \leq 1.90$. In comparison with a refractive index range (from 1.55 to 1.65) of a plastic optical element, a refractive index may be selected from a wider range, and it is easier to obtain a thinner glass optical element with better performance. This helps reduce the axial thickness TTL 1 of the plurality of optical elements in the optical lens 10, and it is not easy to make an optical element structure in a complex shape. Therefore, in some embodiments of this application, in consideration of manufacturing costs, efficiency, and an optical effect, specific application materials of different optical elements are properly selected based on a requirement. In some embodiments of this application, all the optical elements in the optical lens 10 are made of the plastic material, to reduce manufacturing costs and manufacturing difficulty of the optical lens 10. It may be understood that in some implementations of this application, a glass optical element may further be disposed in the optical lens 10, to further reduce the axial thickness TTL 1 of the plurality of optical elements in the optical lens 10. For example, the reflex optical element in the first component S1 is disposed as a glass optical element.

In this application, parameters (including a material, an axial thickness, and a surface parameter) of each optical element in each component are properly set, to properly allocate focal power configured for each component, so as to optimize optical parameters such as a focal length and a refractive index of each component. Therefore, the optical lens 10 obtains high imaging performance, and has a relatively small length size, to meet a requirement for a thin electronic device 1000. Specifically, in some implementations of this application, the optical lens 10 meets the following relational expression:

$$0.3 \leq |f_1/f| \leq 0.8,$$

where

$f_1$ is a focal length of the first component S1, and f is a total focal length of the optical lens 10.

A ratio of the focal length of the first component S1 to the total focal length of the optical lens 10 is specified in the foregoing relational expression, in other words, the focal power of the first component S1 and the focal power of the second component S2 in the optical lens 10 are properly allocated to some extent, so that the optical lens 10 can obtain a good long-range photographing effect, and the length of the optical lens 10 can be reduced, to implement a case in which the optical lens 10 is suitable for a thin electronic device 1000. Specifically, in the implementations of this application, the ratio of the focal length of the first component S1 to the total focal length of the optical lens 10 is relatively large, in other words, the first component S 1 has relatively high focal power, and is mainly used to increase the focal length of the optical lens 10, to achieve a better long-range photographing effect.

It should be noted that in the implementations of this application, the optical element included in the first component S1 is a thick optical element with a specific thickness or an optical element group including a plurality of optical elements. Therefore, in the implementations of this application, the focal length $f_1$ of the first component S 1 is an effective focal length EFL 1 of the first component S 1, and the total focal length f of the optical lens 10 is the effective focal length EFL of the optical lens 10.

In this application, all optical elements in the second component S2 are transmissive optical elements. Light is emitted from the first component S 1, and then incident into the second component S2, and each optical element in the second component S2 corrects and adjusts the light emitted from the first component S 1, to obtain an image with better imaging quality. In some implementations of this application, the second component S2 includes at least two optical elements. The at least two optical elements cooperate with each other to achieve a better field of view correction effect, so that the optical lens 10 can obtain a higher-quality image. In some implementations, both an object-side surface and an image-side surface of each optical element in the second component S2 are aspheric surfaces, in other words, there is a higher degree of freedom in designing the object-side surface and the image-side surface of each optical element in the second component S2, so that a desired effect is more conveniently obtained through design. In some implementations, an object-side surface and an image-side surface of the optical element in the first component S 1 may also be freeform surfaces, so that a desired effect is more conveniently obtained through design.

In some implementations, when both an image-side surface and an object-side surface of each optical element are aspheric surfaces, the image-side surface and the object-side surface of each optical element meet the following formula:

$$z=\frac{cr^2}{1+\sqrt{1-(1+K)c^2r^2}}+\sum_{i=1}^{N}a_i\rho^i \, ,$$

where

z is a vector height of the aspheric surface, r is a radial coordinate of the aspheric surface, c is vertex curvature of the aspheric surface, K is a quadric constant, $a_i$ is an aspheric coefficient, and $\rho$ is a normalized axial coordinate.

Based on the foregoing relational expression, optical elements having different aspheric surfaces are obtained, so that different optical elements can achieve different optical effects, and the optical elements having different aspheric surfaces cooperate to achieve a good photographing effect.

It may be understood that in some implementations, object-side surfaces or image-side surfaces of some optical elements in the first component S1 or the second component S2 may alternatively be planes or spherical surfaces.

In the implementations of this application, a diameter of an optical element with a largest diameter in the optical lens 10 ranges from 7 mm to 10 mm, so that a design requirement is met to implement an optical lens 10 with a relatively long focal length and a relatively short optical length, and a size of the optical lens 10 in a radial direction (namely, a direction perpendicular to the optical axis direction) is reduced as much as possible, to reduce space occupied by the optical lens 10. Light needs to be reflected for a plurality of times in the reflex optical element, and therefore the reflex optical element needs to have a relatively large diameter. Usually, the reflex optical element is an optical element with a largest diameter in all the optical elements in the optical lens 10, in other words, a diameter of the reflex optical element ranges from 7 mm to 10 mm, to ensure that an optical path can be axially folded by using the reflex optical element to obtain an optical lens 10 with a relatively small thickness, and to avoid a case in which the size of the optical lens 10 in the radial direction is increased due to an excessively large diameter of the reflex optical element, so as to reduce space occupied by the optical lens 10 in the radial direction.

In some implementations, the optical lens 10 further meets the following relational expression:

$$0.05 \leq IH/EFL \leq 0.15,$$

where

IH is a maximum image height of the optical lens 10, and EFL is the effective focal length of the optical lens 10.

In the implementations of this application, it is specified that a ratio of the image height of the optical lens 10 to the effective focal length of the optical lens 10 meets the foregoing relational expression, to ensure that the optical lens 10 has a relatively large image height, so that the optical lens 10 can have relatively good imaging quality.

Based on the relational expressions and ranges given in some embodiments of this application, by using a combination of the reflex optical element in the first component S1 and the transmissive optical element in the second component S2, the optical lens 10 can meet the requirements of long-range photographing and a short optical length, and can obtain relatively high imaging performance. In addition, in comparison with the periscope lens, the size of the optical lens 10 in the radial direction (namely, an optical axis direction perpendicular to the optical axis) is not excessively increased, and a case in which space occupied by the optical lens 10 in a direction perpendicular to the thickness direction of the electronic device 1000 is increased is avoided.

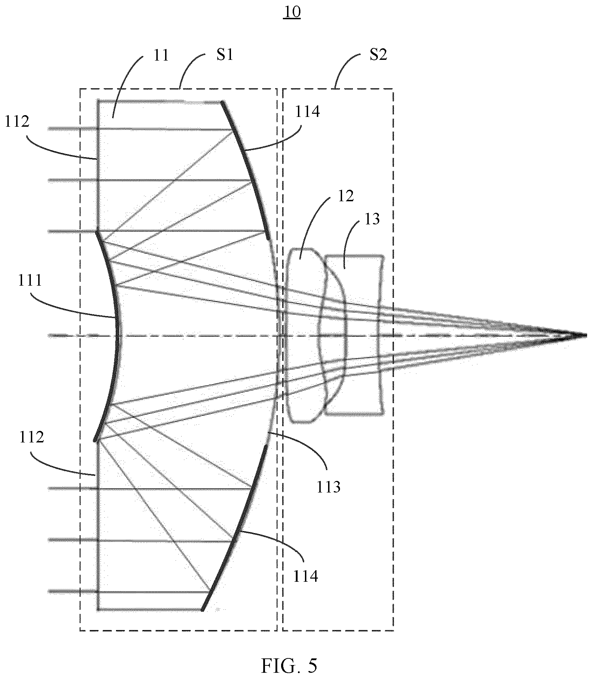

Some specific non-limiting examples of the embodiments of this application are described below in more detail with reference to FIG. 5 to FIG. 24.

FIG. 5 is a schematic diagram of a partial structure of an optical lens 10 according to a first embodiment of this application. In this embodiment, the optical lens 10 includes two components. The two components are respectively a first component S1 and a second component S2. The first component S1 includes a first optical element 11, and the second component S2 includes a second optical element 12 and a third optical element 13. The first optical element 11, the second optical element 12, and the third optical element 13 are sequentially disposed from an object side to an image side, and all the optical elements are coaxially disposed. The first optical element 11 is a reflex optical element, and both the second optical element 12 and the third optical element 13 are common optical elements.

In this implementation, the first optical element 11 has positive focal power, and both the second optical element 12 and the third optical element 13 have negative focal power. All of the first optical element 11, the second optical element 12, and the third optical element 13 are made of a plastic material, to reduce manufacturing costs of the optical lens 10.

Design parameters in the first embodiment of this application are shown in Table 1.

**Table 1 Design parameters of the optical lens 10 in the first embodiment**

| TTL/EFL | 0.306 | $|f_1/f|$ | 0.438 | $|f_2/f|$ | 0.11 |
|---|---|---|---|---|---|
| OBS | 0.45 | IH/EFL | 0.084 | Dmax | 8.5 mm |

Meanings of symbols in the table are as follows:

The symbol f is a focal length of the optical lens 10.
The symbol $f_1$ is a focal length of the first component S 1.
The symbol $f_2$ is a focal length of the second component S2.
EFL is an effective focal length of the optical lens 10. In this implementation, values of f and EFL are the same.
TTL is a total track length of the optical lens 10, and TTL is a sum of a back focal length BFL of the optical lens 10 and an axial thickness TTL 1 of a plurality of optical elements in the optical lens 10.
IH is a maximum image height of the optical lens 10.
$D_{max}$ is a diameter of an optical element with a largest diameter in the optical lens 10, namely, a diameter of the first optical element 11 in this implementation.

It should be noted that in this application, symbols such as f, $f_1$, $f_2$, TTL, EFL, OBS, IH, and $D_{max}$ represent same meanings, and details are not described when the symbols subsequently appear again.

Based on the design parameters in Table 1, parameters such as a curvature radius, a thickness, a refractive index, and an Abbe number of each optical element and surface coefficients of an object-side surface and an image-side surface of each optical element need to be correspondingly designed, to implement the design parameters in Table 1. Table 2 shows the parameters such as the curvature radius, the thickness, the refractive index, and the Abbe number of each optical element in the optical lens 10 in this embodiment of this application, and Table 3 shows the surface coefficients of each optical element in the optical lens 10 in this embodiment.

**Table 2 Curvature radius, thickness, refractive index, and Abbe number of each optical element in the optical lens 10 in the first implementation**

| | R | Thickness | | nd | | vd | |
|---|---|---|---|---|---|---|---|
| R1 | Infinity | a1 | 2.798 | n1 | 1.52 | v1 | 64 |
| R2 | -7.634 | a2 | -2.448 | | | | |
| R3 | -3.448 | a3 | 2.448 | | | | |
| R4 | -7.634 | d1 | 0.1 | | | | |
| R5 | 10.032 | d2 | 1.285 | n2 | 1.48 | v2 | 70.4 |
| R6 | 1.872 | a4 | 1.676 | | | | |
| R7 | -58.550 | d3 | 0.943 | n3 | 1.62 | v2 | 60.3 |
| R8 | 4.885 | a5 | 0.080 | | | | |

Meanings of symbols in the table are as follows:

R1 is a curvature radius of a first transmission region 112 on an object-side surface of the first optical element 11 at a paraxial position, where Infinity indicates that the curvature radius is infinite, in other words, the first transmission region 112 on the object-side surface of the first optical element 11 is a plane. The paraxial position is a region close to an optical axis of the optical element. In this implementation, the curvature radius of the first transmission region 112 at the paraxial position is a curvature radius of a part that is of the first transmission region 112 and that extends to the paraxial position.

R2 is a curvature radius of a second reflection region 114 on an image-side surface of the first optical element 11 at the paraxial position. In this implementation, the curvature radius of the second reflection region 114 at the paraxial position is a curvature radius of a part that is of the second reflection region 114 and that extends to the paraxial position.

R3 is a curvature radius of a first reflection region 111 on the object-side surface of the first optical element 11 at the paraxial position.

R4 is a curvature radius of a second transmission region 113 on the image-side surface of the first optical element 11 at the paraxial position.

R5 is a curvature radius of an object-side surface of the second optical element 12 at a paraxial position.

R6 is a curvature radius of an image-side surface of the second optical element 12 at the paraxial position.

R7 is a curvature radius of an object-side surface of the third optical element 13 at a paraxial position.

R8 is a curvature radius of an image-side surface of the third optical element 13 at the paraxial position.

The symbol a1 is an axial distance between the first transmission region 112 on the object-side surface of the first optical element 11 and the second reflection region 114 on the image-side surface of the first optical element 11.

The symbol a2 is an axial distance between the second reflection region 114 on the image-side surface of the first optical element 11 and the first reflection region 111 on the object-side surface of the first optical element 11.

The symbol a3 is an axial distance between the first reflection region 111 on the object-side surface of the first optical element 11 and the second transmission region 113 on the image-side surface of the first optical element 11.

The symbol a4 is an axial distance between the second transmission region 113 on the image-side surface of the first optical element 11 and the object-side surface of the second optical element 12.

The symbol a5 is an axial distance between the image-side surface of the second optical element 12 and the object-side surface of the third optical element 13.

The symbol d1 is an axial thickness of the first optical element 11.

The symbol d2 is an axial thickness of the second optical element 12.

The symbol d3 is an axial thickness of the third optical element 13.

The symbol n1 is a refractive index of the first optical element 1111.

The symbol n2 is a refractive index of the second optical element 12.

The symbol n3 is a refractive index of the third optical element 13.

It should be noted that in this application, unless otherwise described, the symbols represent the same meanings, and details are not described when the symbols subsequently appear again.

It should be noted that a positive or negative curvature radius indicates that an optical surface protrudes towards the object side or the image side. When the optical surface (including the object-side surface or the image-side surface) protrudes towards the object side, the optical surface has a positive curvature radius. When the optical surface (including the object-side surface or the image-side surface) protrudes towards the image side, it is equivalent to that the optical surface is concave on the object-side surface, and the optical surface has a negative curvature radius.

In this implementation, both the object-side surface and the image-side surface of each optical element in each of the first component S1 and the second component S2 are aspheric surfaces, and the surface coefficients of the optical element are aspheric coefficients. The surface coefficients of each optical element in the optical lens 10 in this embodiment are shown in Table 3.

**Table 3 Aspheric coefficients of the optical lens 10 in the first implementation**

|  | Type | K | A2 | A3 | A4 | A5 | A6 |
|---|---|---|---|---|---|---|---|
| R1 | Even aspheric surface | 0.00E+00 | 0 | 0 | 0 | 0 | 0 |
| R2 | Even aspheric surface | 0.00E+00 | 3.423E-4 | 3.01E-06 | -6.05E-08 | 5.15E-09 | -1.12E-10 |
| R3 | Even aspheric surface | 0.00E+00 | 1.12E-02 | -6.72E-04 | -1.46E-05 | 3.29E-05 | -5.50E-06 |
| R4 | Even aspheric surface | 0.00E+00 | 3.423E-4 | 3.01E-06 | -6.05E-08 | 5.15E-09 | -1.12E-10 |
| R5 | Even aspheric surface | 0.00E+00 | -7.50E-02 | 5.41E-02 | -1.13E-02 | 2.53E-03 | -2.50E-05 |
| R6 | Even aspheric surface | 0.00E+00 | -1.71E-01 | 2.10E-02 | -3.05E-02 | 4.43E-03 | -9.46E-05 |
| R7 | Even aspheric surface | 0.00E+00 | -1.73E-01 | -3.20E-02 | -7.51E-02 | 6.38E-02 | -2.19E-13 |

(continued)

|  | Type | K | A2 | A3 | A4 | A5 | A6 |
|---|---|---|---|---|---|---|---|
| R8 | Even aspheric surface | 0.00E+00 | -7.42E-02 | -7.09E-03 | 3.28E-02 | -6.03E-03 | -1.05E-12 |

Herein, K is a quadric constant, and symbols such as A2, A3, A4, A5, and A6 represent aspheric coefficients. It should be noted that each parameter in the table is expressed by using a scientific notation method. For example, 3.423E-4 means $3.423 \times 10^{-4}$; and -7.50E-02 means $-7.50 \times 10^{-2}$. It should be noted that in this application, unless otherwise explained, when symbols such as K, A2, A3, A4, A5, and A6 subsequently appear again, the symbols represent meanings the same as those herein, and details are not described subsequently.

In this embodiment, surface types of all of the first optical element 11 to the third optical element 13 are even aspheric surfaces, and may be defined by using the following aspheric formula:

$$z = \frac{cr^2}{1+\sqrt{1-Kc^2r^2}} + \sum_{i=1}^{N} a_i \rho^i \,.$$

In this implementation,

$$\sum_{i=1}^{N} a_i \rho^i = A_2 r^4 + A_3 r^6 + A_4 r^8 + A_5 r^{10} + A_6 r^{12} \,,$$

where

z is a vector height of the aspheric surface, r is a radial coordinate of the aspheric surface, c is vertex curvature of the aspheric surface, K is a quadric constant, and A2, A3, A4, A5, and A6 are aspheric coefficients. Based on the design parameters in Table 2 and Table 3, the optical lens 10 having basic parameters shown in Table 4 is designed, to meet a requirement that the optical lens 10 has relatively good imaging quality, and has a long focal length and a short optical length.

**Table 4 Basic parameters of the optical lens 10 in the first embodiment**

| Focal length f | 24.5 mm |
|---|---|
| F-number | 3 |
| Central obscuration ratio OBS | 0.45 |
| Image height IH | 2.06 mm |
| Half FOV | 4.312° |
| BFL | 3.29 mm |
| TTL | 7.4 mm |
| Telephoto ratio | 0.306 |
| Design wavelength | 470 nm-650 nm |

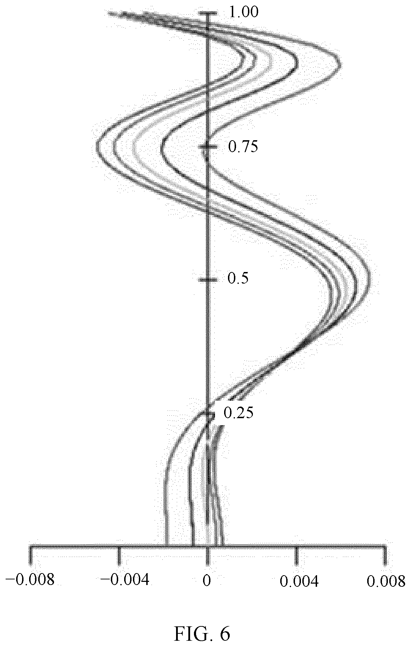

FIG. 6 to FIG. 9 are diagrams representing optical performance of the optical lens 10 in the first embodiment.

Specifically, FIG. 6 is a schematic diagram of axial aberrations that exist after light whose wavelengths are respectively 650 nm, 610 nm, 555 nm, 510 nm, and 470 nm passes through the optical lens 10 in the first embodiment. In FIG. 6, a vertical coordinate represents a normalized pupil coordinate, and a horizontal coordinate represents an aberration in an axial direction, and is in a unit of millimeter. It may be learned from FIG. 6 that in this embodiment, the axial aberration is controlled within a very small range.

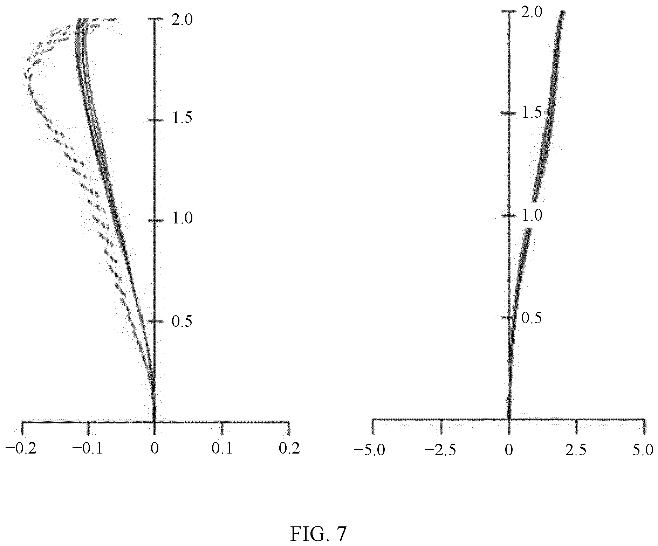

FIG. 7 is a schematic diagram of field curvature and optical distortion that exist after light whose wavelength is 555 nm passes through the optical lens 10 in the first embodiment, and is used to represent a difference between deformation of an image that exists after the light passes through the optical lens 10 and an ideal shape. In a left figure in FIG. 7, a solid line is a schematic diagram of field curvature that is in a meridian direction and that exists after the light of 555 nm passes through the optical lens 10, and a dashed line is a schematic diagram of field curvature that is in a sagittal direction and that exists after the light of 555 nm passes through the optical lens 10. A right figure in FIG. 7 is a schematic diagram of optical distortion that exists after the light of 555 nm passes through the optical lens 10 in the first embodiment. It may be learned from the figure that in this embodiment, the field curvature and the distortion are controlled within a visually identifiable range (ranges that are equal to and less than 2% are visually unidentifiable) in an optical system.

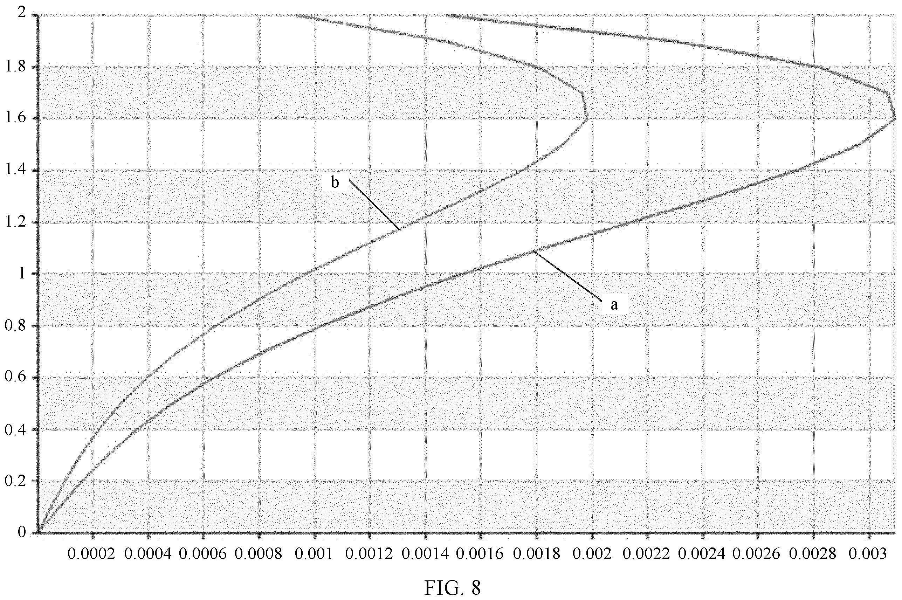

FIG. 8 is a schematic diagram of lateral chromatic aberrations that are at different image height positions and that exist after light of different wavelengths passes through the optical lens 10 in the first embodiment. In FIG. 8, a vertical coordinate represents an actual image height, and is in a unit of millimeter (mm), and a horizontal coordinate represents an imaging deviation, and is in a unit of millimeter (mm). A curve a represents imaging deviations that are at different image height positions and that are between an image that exists after light whose wavelength is 620 nm passes through the optical lens 10 in the first embodiment and an image that exists after light whose wavelength is 470 nm passes through the optical lens 10 in the first embodiment, and a curve b represents imaging deviations that are at different image height positions and that are between an image that exists after light whose wavelength is 550 nm passes through the optical lens 10 in the first embodiment and the image that exists after the light whose wavelength is 470 nm passes through the optical lens 10 in the first embodiment. It may be learned from the figure that there are relatively small imaging deviations at different image height positions between images that exist after light of different bands passes through the optical lens 10 in the first embodiment, in other words, an imaging deviation that exists after light of various wavelengths passes through the optical lens 10 in the first embodiment basically does not affect imaging quality of the optical lens 10.

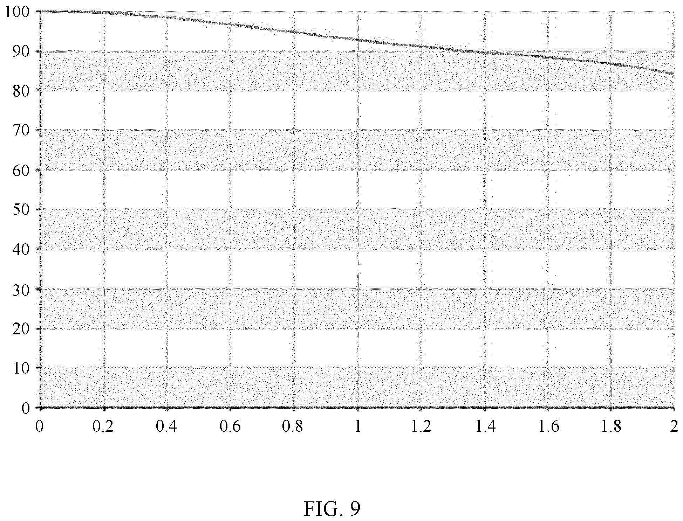

FIG. 9 shows a distribution curve of relative illumination on an image plane of the optical lens 10 in the first embodiment. In FIG. 9, a horizontal coordinate represents an actual image height, and is in a unit of millimeter (mm), and a vertical coordinate represents relative illumination, and is in a unit of millimeter (mm). It may be learned from the figure that there is relatively even distribution in different regions on the image plane of the optical lens in this implementation, that is, the optical lens 10 in this implementation can obtain an image with relatively uniform brightness, and therefore a relatively good image can be obtained.

In the optical lens 10 provided in this embodiment, the focal length f is 24.5 mm, the total track length TTL is 7.4 mm, and the length of TTL 1 is 4.11 mm. Therefore, the optical lens 10 has good imaging quality and a long focal length (f is relatively large) to achieve a long-range photographing effect, and has a relatively short optical length (both TTL 1 and TTL are relatively small), in other words, the optical lens 10 in this implementation has a relatively short length, so that an electronic device 1000 including the optical lens 10 can have a relatively small thickness.

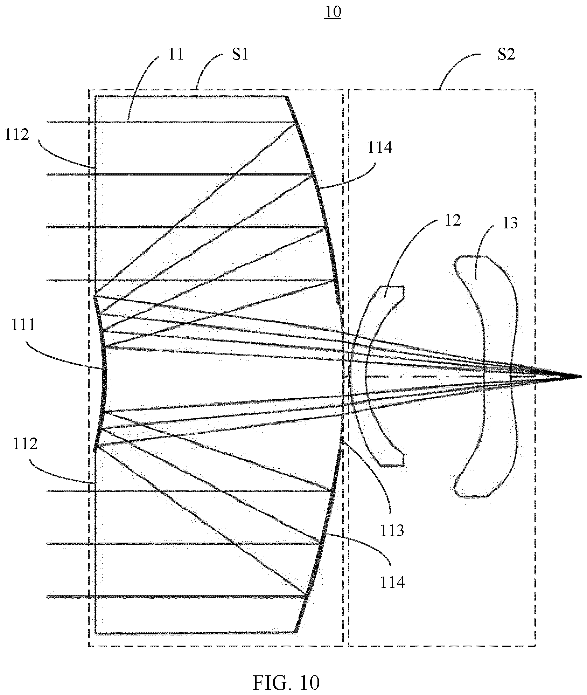

FIG. 10 is a schematic diagram of a structure of an optical lens 10 according to a second embodiment of this application. In this embodiment, the optical lens 10 includes two components. The two components are respectively a first component S1 and a second component S2. The first component S1 includes a first optical element 11, and the second component S2 includes a second optical element 12 and a third optical element 13. The first optical element 11, the second optical element 12, and the third optical element 13 are sequentially disposed from an object side to an image side, and all the optical elements are coaxially disposed. The first optical element 11 is a reflex optical element, and both the second optical element 12 and the third optical element 13 are common optical elements.

In this implementation, the first optical element 11 has positive focal power, and both the second optical element 12 and the third optical element 13 have negative focal power. All of the first optical element 11, the second optical element 12, and the third optical element 13 are made of a plastic material, to reduce manufacturing costs of the optical lens 10.

Design parameters in the second embodiment of this application are shown in Table 5. For meanings of symbols in Table 5, refer to Table 1.

**Table 5 Design parameters of the optical lens 10 in the second embodiment**

| TTL/EFL | 0.306 | $|f_1/f|$ | 0.627 | $|f_2/f|$ | 0.118 |
|---------|-------|-----------|-------|-----------|-------|
| OBS | 0.31 | IH/EFL | 0.084 | Dmax | 9.2 mm |

Based on the design parameters in Table 5, parameters such as a curvature radius, a thickness, a refractive index, and an Abbe number of each optical element and surface coefficients of an object-side surface and an image-side surface of each optical element need to be correspondingly designed, to implement the design parameters in Table 5. Table 6 shows the parameters such as the curvature radius, the thickness, the refractive index, and the Abbe number of each optical element in the optical lens 10 in this embodiment of this application, and Table 7 shows the surface coefficients of each optical element in the optical lens 10 in this embodiment.

**Table 6 Curvature radius, thickness, refractive index, and Abbe number of each optical element in the optical lens 10 in the second implementation**

|    | R | Thickness | | | nd | | vd | |
|----|---|---------|--|--|----|--|----|--|
| R1 | Infinity | a1 | 3.738 | n1 | 1.52 | v1 | 64 |
| R2 | -10.283 | a2 | -3.588 | | | | |
| R3 | -3.844 | a3 | 3.588 | | | | |
| R4 | -10.283 | d1 | 0.1 | | | | |
| R5 | 1.961 | d2 | 0.238 | n2 | 1.75 | v2 | 41.2 |
| R6 | 1.369 | a4 | 1.776 | | | | |
| R7 | 8.443 | d3 | 0.410 | n3 | 1.48 | v3 | 70.4 |
| R8 | 2.128 | a5 | 1.114 | | | | |

For meanings of symbols in the table, refer to Table 2.

In this implementation, both the object-side surface and the image-side surface of each optical element in each of the first component S1 and the second component S2 are aspheric surfaces, and the surface coefficients of the optical element are aspheric coefficients. The surface coefficients of each optical element in the optical lens 10 in this embodiment are shown in Table 7.

**Table 7 Aspheric coefficients of the optical lens 10 in the second implementation**

|    | Type | K | A2 | A3 | A4 | A5 | A6 |
|----|------|---|-----|-----|-----|-----|-----|
| R1 | Even aspheric surface | 0.00E+00 | 0 | 0 | 0 | 0 | 0 |
| R2 | Even aspheric surface | 1.07E-02 | 1.37E-04 | -1.15E-07 | 7.17E-08 | -3.08E-09 | 3.86E-11 |
| R3 | Even aspheric surface | -2.21E-01 | 6.60E-03 | -5.06E-04 | 1.47E-04 | -3.82E-05 | 3.75E-06 |
| R4 | Even aspheric surface | 1.07E-02 | 1.37E-04 | -1.15E-07 | 7.17E-08 | -3.08E-09 | 3.86E-11 |
| R5 | Even aspheric surface | -1.51E+00 | -3.69E-02 | 3.09E-02 | -5.72E-03 | 7.30E-04 | -2.50E-05 |
| R6 | Even aspheric surface | -3.73E-01 | -6.50E-02 | 4.88E-02 | -1.35E-02 | 7.61E-03 | -9.46E-05 |
| R7 | Even aspheric surface | -1.64E-01 | 2.86E-02 | -3.84E-03 | 1.70E-03 | 2.04E-13 | -2.70E-13 |
| R8 | Even aspheric surface | 0.00E+00 | -1.79E-01 | 3.82E-02 | -1.00E-02 | 9.09E-04 | -1.85E-12 |

In this embodiment, surface types of all of the first optical element 11 to the third optical element 13 are even aspheric surfaces, and may be defined by using the following aspheric formula:

$$z = \frac{cr^2}{1+\sqrt{1-Kc^2r^2}} + \sum_{i=1}^{N} a_i \rho^i .$$

In this implementation,

$$\sum_{i=1}^{N} a_i \rho^i = A_2 r^4 + A_3 r^6 + A_4 r^8 + A_5 r^{10} + A_6 r^{12} ,$$

where

z is a vector height of the aspheric surface, r is a radial coordinate of the aspheric surface, c is vertex curvature of the aspheric surface, K is a quadric constant, and A2, A3, A4, A5, and A6 are aspheric coefficients. Based on the design parameters in Table 6 and Table 7, the optical lens 10 having basic parameters shown in Table 8 is designed, to meet a requirement that the optical lens 10 has relatively good imaging quality, and has a long focal length and a short optical length.

**Table 8 Basic parameters of the optical lens 10 in the second embodiment**

| | |
|---|---|
| Focal length f | 24.5 mm |
| F-number | 3 |
| Central obscuration ratio OBS | 0.31 |
| Image height IH | 2.06 mm |
| Half FOV | 4.312° |
| BFL | 1.11 mm |
| TTL | 7.4 mm |
| Telephoto ratio | 0.306 |
| Design wavelength | 470 nm-650 nm |

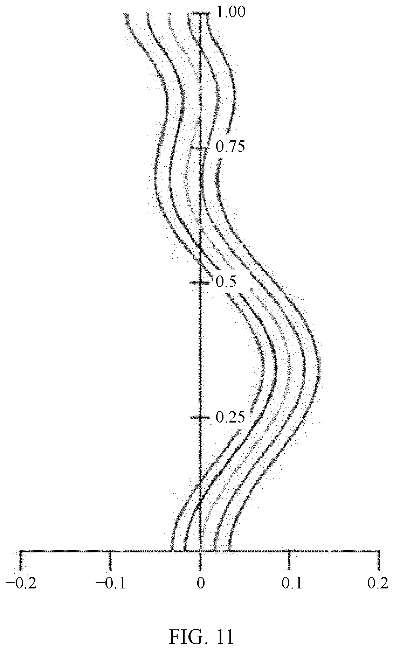

FIG. 11 to FIG. 14 are diagrams representing optical performance of the optical lens 10 in the second embodiment.

Specifically, FIG. 11 is a schematic diagram of axial aberrations that exist after light whose wavelengths are respectively 650 nm, 610 nm, 555 nm, 510 nm, and 470 nm passes through the optical lens 10 in the second embodiment. In FIG. 11, a vertical coordinate represents a normalized pupil coordinate, and a horizontal coordinate represents an aberration in an axial direction, and is in a unit of millimeter. It may be learned from FIG. 11 that in this embodiment, the axial aberration is controlled within a very small range.

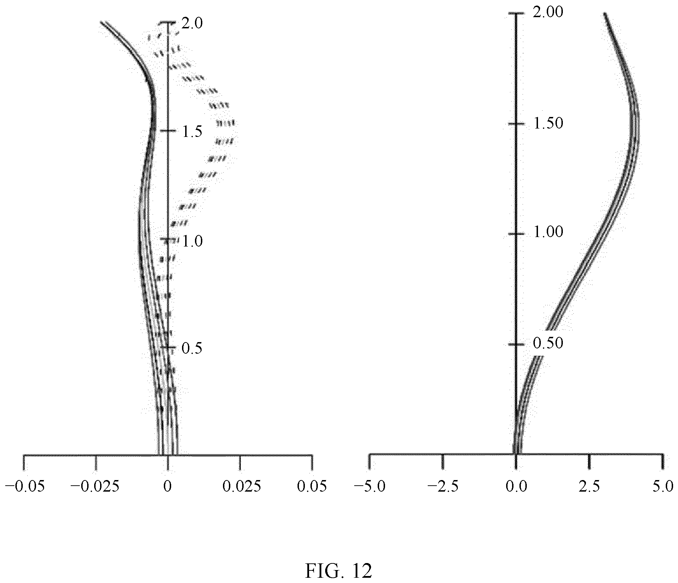

FIG. 12 is a schematic diagram of field curvature and optical distortion that exist after light whose wavelengths are respectively 650 nm, 610 nm, 555 nm, 510 nm, and 470 nm passes through the optical lens 10 in the second embodiment, and is used to represent a difference between deformation of an image that exists after the light passes through the optical lens 10 and an ideal shape. In a left figure in FIG. 12, a solid line is a schematic diagram of field curvature that is in a meridian direction and that exists after the light whose wavelengths are respectively 650 nm, 610 nm, 555 nm, 510 nm, and 470 nm passes through the optical lens 10, and a dashed line is a schematic diagram of field curvature that is in a sagittal direction and that exists after the light whose wavelengths are respectively 650 nm, 610 nm, 555 nm, 510 nm, and 470 nm passes through the optical lens 10. A right figure in FIG. 12 is a schematic diagram of optical distortion that exists after the light whose wavelengths are respectively 650 nm, 610 nm, 555 nm, 510 nm, and 470 nm passes through the optical lens 10 in the second embodiment. It may be learned from the figure that in this embodiment, the field curvature and the distortion are controlled within a visually identifiable range (ranges that are equal to and less than 2% are visually unidentifiable) in an optical system.

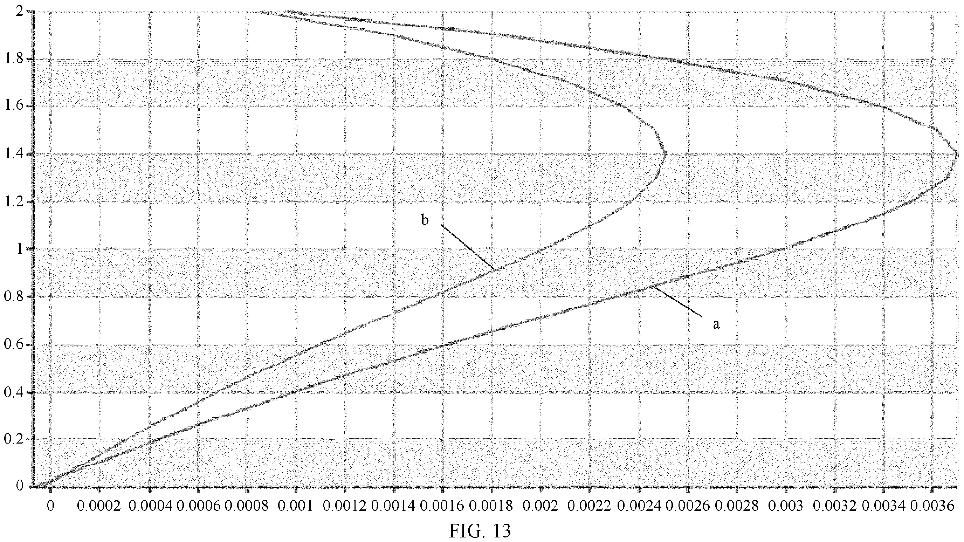

FIG. 13 is a schematic diagram of lateral chromatic aberrations that are at different image height positions and that exist after light of different wavelengths passes through the optical lens 10 in the second embodiment. In FIG. 13, a vertical coordinate represents an actual image height, and is in a unit of millimeter (mm), and a horizontal coordinate represents an imaging deviation, and is in a unit of millimeter (mm). A curve a represents imaging deviations that are at different image height positions and that are between an image that exists after light whose wavelength is 620 nm passes through the optical lens 10 in the first embodiment and an image that exists after light whose wavelength is 470 nm passes through the optical lens 10 in the first embodiment, and a curve b represents imaging deviations that are at different image height positions and that are between an image that exists after light whose wavelength is 550 nm passes through the optical lens 10 in the first embodiment and the image that exists after the light whose wavelength is 470 nm passes through the optical lens 10 in the first embodiment. It may be learned from the figure that there are relatively small imaging deviations at different image height positions between images that exist after light of different bands passes through the optical lens 10 in the first embodiment, in other words, an imaging deviation that exists after light of various wavelengths passes through the optical lens 10 in the first embodiment basically does not affect imaging quality of the optical lens 10.

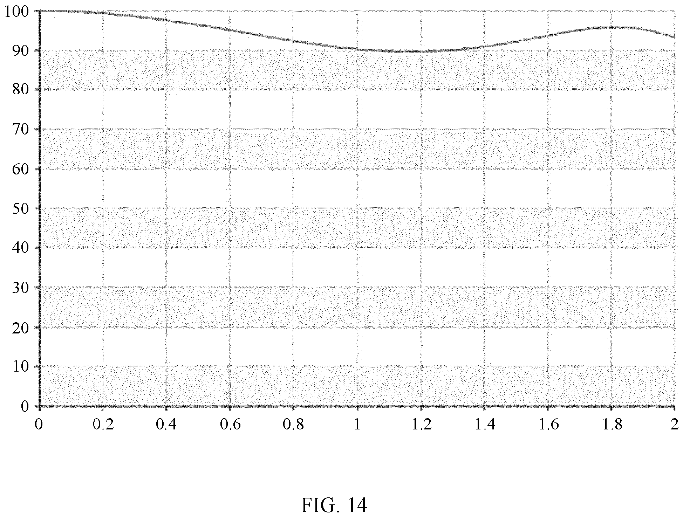

FIG. 14 shows a distribution curve of relative illumination on an image plane of the optical lens 10 in the second embodiment. In FIG. 14, a horizontal coordinate represents an actual image height, and is in a unit of millimeter (mm), and a vertical coordinate represents relative illumination, and is in a unit of millimeter (mm). It may be learned from the figure that there is relatively even distribution in different regions on the image plane of the optical lens in this implementation, that is, the optical lens 10 in this implementation can obtain an image with relatively uniform brightness, and therefore a relatively good image can be obtained.

In the optical lens 10 provided in this embodiment, the focal length f is 24.5 mm, the total track length TTL is 7.4 mm, and the length of TTL 1 is 6.29 mm. Therefore, the optical lens 10 has good imaging quality and a long focal length (f is relatively large) to achieve a long-range photographing effect, and has a relatively short optical length (both TTL 1 and TTL are relatively small), in other words, the optical lens 10 in this implementation has a relatively short length, so that an electronic device 1000 including the optical lens 10 can have a relatively small thickness.

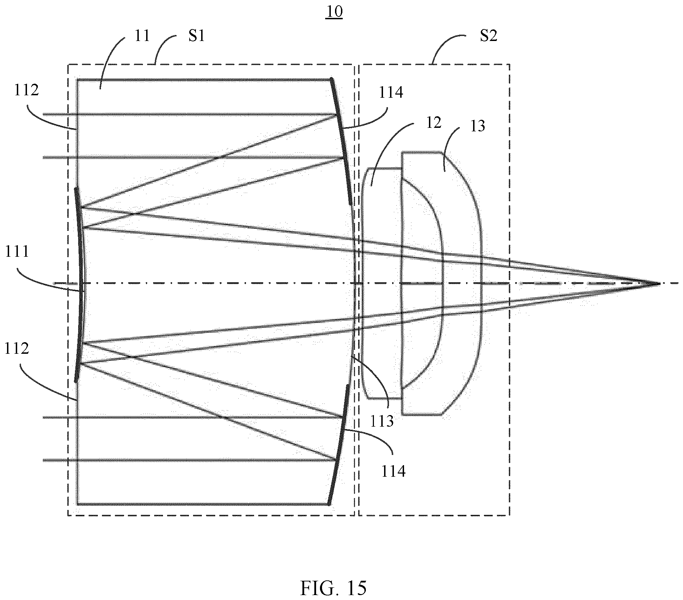

FIG. 15 is a schematic diagram of a structure of an optical lens 10 according to a third embodiment of this application. In this embodiment, the optical lens 10 includes two components. The two components are respectively a first component S1 and a second component S2. The first component S1 includes a first optical element 11, and the second component S2 includes a second optical element 12 and a third optical element 13. The first optical element 11, the second optical element 12, and the third optical element 13 are sequentially disposed from an object side to an image side, and all the optical elements are coaxially disposed. The first optical element 11 is a reflex optical element, and both the second optical element 12 and the third optical element 13 are common optical elements.

In this implementation, the first optical element 11 has positive focal power, and both the second optical element 12 and the third optical element 13 have negative focal power. All of the first optical element 11, the second optical element 12, and the third optical element 13 are made of a plastic material, to reduce manufacturing costs of the optical lens 10.

Design parameters in the third embodiment of this application are shown in Table 9. For meanings of symbols in Table 9, refer to Table 1.

**Table 9 Design parameters of the optical lens 10 in the third embodiment**

| TTL/EFL | 0.507 | $|f_1/f|$ | 0.755 | $|f_2/f|$ | 0.57 |
|---------|-------|-----------|-------|-----------|------|
| OBS | 0.45 | IH/EFL | 0.1374 | Dmax | 7.4 mm |

Based on the design parameters in Table 9, parameters such as a curvature radius, a thickness, a refractive index, and an Abbe number of each optical element and surface coefficients of an object-side surface and an image-side surface of each optical element need to be correspondingly designed, to implement the design parameters in Table 9. Table 10 shows the parameters such as the curvature radius, the thickness, the refractive index, and the Abbe number of each optical element in the optical lens 10 in this embodiment of this application, and Table 11 shows the surface coefficients of each optical element in the optical lens 10 in this embodiment.

**Table 10 Curvature radius, thickness, refractive index, and Abbe number of each optical element in the optical lens 10 in the third implementation**

| | R | Thickness | | nd | | vd | |
|-----|----------|-----|-------|-----|-------|-----|------|
| R1 | Infinity | a1 | 3.6 | n1 | 1.52 | v1 | 64 |
| R2 | -12.411 | a2 | -3.50 | | | | |
| R3 | -7.920 | a3 | 3.500 | | | | |
| R4 | -12.411 | d1 | 0.1 | | | | |
| R5 | 110.3221 | d2 | 0.5 | n2 | 1.48 | v2 | 70.4 |
| R6 | 7.5561 | a4 | 0.543 | | | | |
| R7 | -41.778 | d3 | 0.5 | n3 | 1.755 | v3 | 27.5 |
| R8 | 22.370 | a5 | 2.357 | | | | |

For meanings of symbols in the table, refer to Table 2.

In this implementation, both the object-side surface and the image-side surface of each optical element in each of the first component S1 and the second component S2 are aspheric surfaces, and the surface coefficients of the optical element are aspheric coefficients. The surface coefficients of each optical element in the optical lens 10 in this embodiment are shown in Table 11.

**Table 11 Aspheric coefficients of the optical lens 10 in the third implementation**

| | Type | K | A2 | A3 | A4 | A5 | A6 |
|-----|----------------------|----------|----|----|----|----|----|
| R1 | Even aspheric surface | 0.00E+00 | 0 | 0 | 0 | 0 | 0 |

(continued)

|  | Type | K | A2 | A3 | A4 | A5 | A6 |
|---|---|---|---|---|---|---|---|
| R2 | Even aspheric surface | 0.00E+00 | 1.3 1E-04 | 4.44E-07 | 9.87E-09 | -1.73E-09 | 6.81E-11 |
| R3 | Even aspheric surface | 0.00E+00 | 3.00E-03 | -2.11E-04 | 6.41E-05 | -3.16E-05 | 6.03E-06 |
| R4 | Even aspheric surface | 0.00E+00 | 1.3 1E-04 | 4.44E-07 | 9.87E-09 | -1.73E-09 | 6.81E-11 |
| R5 | Even aspheric surface | 0.00E+00 | -3.16E-02 | 1.77E-02 | -1.44E-03 | 1.00E-03 | -2.50E-05 |
| R6 | Even aspheric surface | 0.00E+00 | -7.87E-02 | 2.81E-02 | -7.95E-03 | 3.29E-03 | -9.46E-05 |
| R7 | Even aspheric surface | 0.00E+00 | -1.42E-01 | 1.56E-02 | -1.45E-02 | 3.43E-03 | 4.37E-12 |
| R8 | Even aspheric surface | 0.00E+00 | -1.01E-01 | 2.22E-02 | -6.66E-03 | 1.00E-03 | 3.47E-12 |

In this embodiment, surface types of all of the first optical element 11 to the third optical element 13 are even aspheric surfaces, and may be defined by using the following aspheric formula:

$$z=\frac{cr^2}{1+\sqrt{1-Kc^2r^2}}+\sum_{i=1}^{N}a_i\rho^i .$$

In this implementation,

$$\sum_{i=1}^{N}a_i\rho^i=A_2r^4+A_3r^6+A_4r^8+A_5r^{10}+A_6r^{12} ,$$

where

z is a vector height of the aspheric surface, r is a radial coordinate of the aspheric surface, c is vertex curvature of the aspheric surface, K is a quadric constant, and A2, A3, A4, A5, and A6 are aspheric coefficients. Based on the design parameters in Table 10 and Table 11, the optical lens 10 having basic parameters shown in Table 12 is designed, to meet a requirement that the optical lens 10 has relatively good imaging quality, and has a long focal length and a short optical length.

**Table 12 Basic parameters of the optical lens 10 in the third embodiment**

| Focal length f | 15 mm |
|---|---|
| F-number | 3 |
| Central obscuration ratio OBS | 0.45 |
| Image height IH | 2.06 mm |
| Half FOV | 7.45° |
| BFL | 2.35 mm |
| TTL | 7.5 mm |
| Telephoto ratio | 0.506 |
| Design wavelength | 470 nm-650 nm |

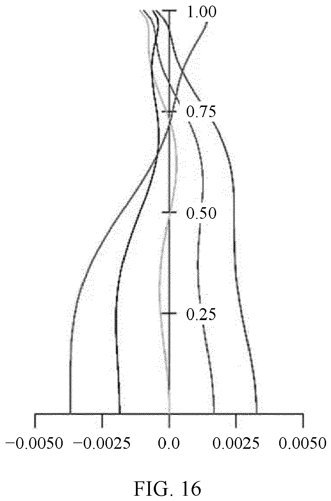

FIG. 16 to FIG. 19 are diagrams representing optical performance of the optical lens 10 in the third embodiment.
Specifically, FIG. 16 is a schematic diagram of axial aberrations that exist after light whose wavelengths are respectively 650 nm, 610 nm, 555 nm, 510 nm, and 470 nm passes through the optical lens 10 in the third embodiment.
In FIG. 14, a vertical coordinate represents a normalized pupil coordinate, and a horizontal coordinate represents an aberration in an axial direction, and is in a unit of millimeter. It may be learned from FIG. 14 that in this embodiment, the axial aberration is controlled within a very small range.

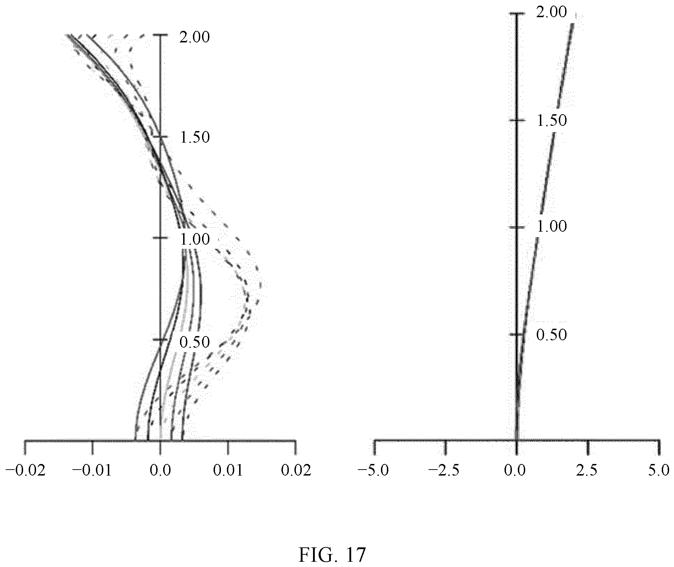

FIG. 17 is a schematic diagram of field curvature and optical distortion that exist after light whose wavelengths are respectively 650 nm, 610 nm, 555 nm, 510 nm, and 470 nm passes through the optical lens 10 in the third embodiment, and is used to represent a difference between deformation of an image that exists after the light passes through the optical lens 10 and an ideal shape. In a left figure in FIG. 17, a solid line is a schematic diagram of field curvature that is in a meridian direction and that exists after the light whose wavelengths are respectively 650 nm, 610 nm, 555 nm, 510 nm, and 470 nm passes through the optical lens 10, and a dashed line is a schematic diagram of field curvature that is in a sagittal direction and that exists after the light whose wavelengths are respectively 650 nm, 610 nm, 555 nm, 510 nm, and 470 nm passes through the optical lens 10. A right figure in FIG. 17 is a schematic diagram of optical distortion that exists after the light whose wavelengths are respectively 650 nm, 610 nm, 555 nm, 510 nm, and 470 nm passes through the optical lens 10 in the third embodiment. It may be learned from the figure that in this embodiment, the field curvature and the distortion are controlled within a visually identifiable range (ranges that are equal to and less than 2% are visually unidentifiable) in an optical system.

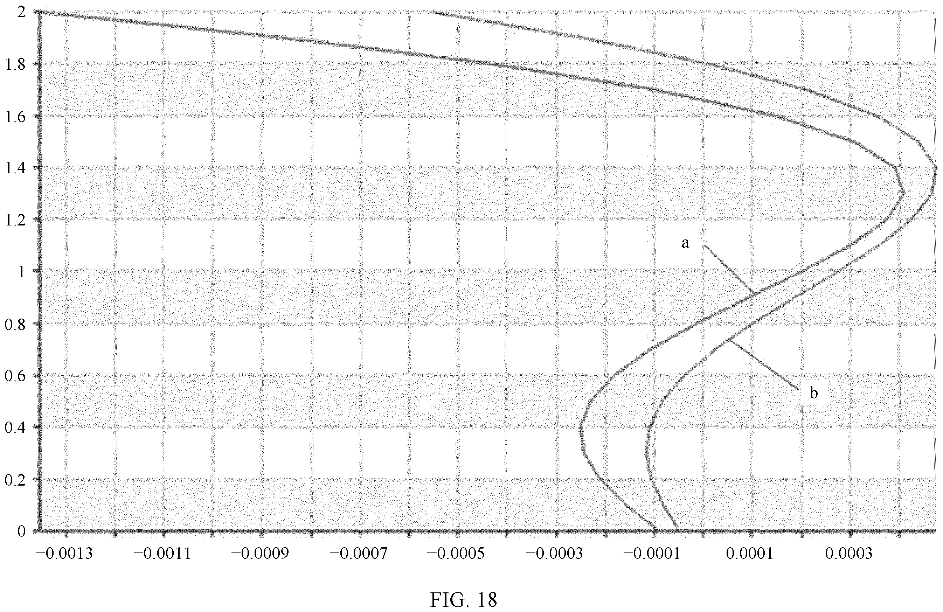

FIG. 18 is a schematic diagram of lateral chromatic aberrations that are at different image height positions and that exist after light of different wavelengths passes through the optical lens 10 in the third embodiment. In FIG. 18, a vertical coordinate represents an actual image height, and is in a unit of millimeter (mm), and a horizontal coordinate represents an imaging deviation, and is in a unit of millimeter (mm). A curve a represents imaging deviations that are at different image height positions and that are between an image that exists after light whose wavelength is 620 nm passes through the optical lens 10 in the first embodiment and an image that exists after light whose wavelength is 470 nm passes through the optical lens 10 in the first embodiment, and a curve b represents imaging deviations that are at different image height positions and that are between an image that exists after light whose wavelength is 550 nm passes through the optical lens 10 in the first embodiment and the image that exists after the light whose wavelength is 470 nm passes through the optical lens 10 in the first embodiment. It may be learned from the figure that there are relatively small imaging deviations at different image height positions between images that exist after light of different bands passes through the optical lens 10 in the first embodiment, in other words, an imaging deviation that exists after light of various wavelengths passes through the optical lens 10 in the first embodiment basically does not affect imaging quality of the optical lens 10.

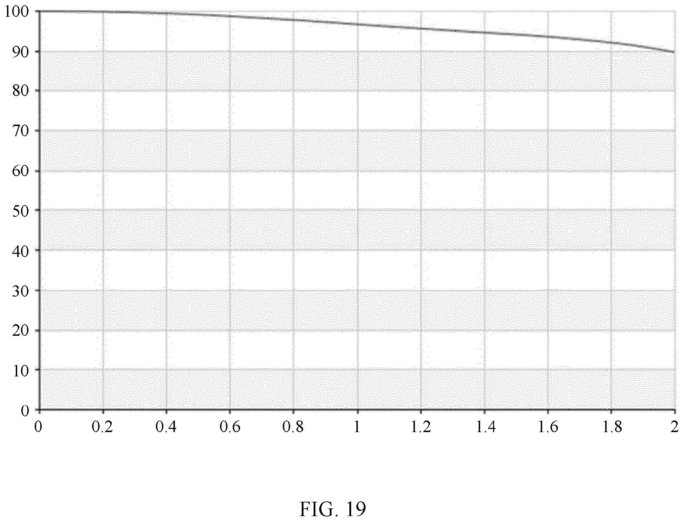

FIG. 19 shows a distribution curve of relative illumination on an image plane of the optical lens 10 in the third embodiment. In FIG. 19, a horizontal coordinate represents an actual image height, and is in a unit of millimeter (mm), and a vertical coordinate represents relative illumination, and is in a unit of millimeter (mm). It may be learned from the figure that there is relatively even distribution in different regions on the image plane of the optical lens in this implementation, that is, the optical lens 10 in this implementation can obtain an image with relatively uniform brightness, and therefore a relatively good image can be obtained.

In the optical lens 10 provided in this embodiment, the focal length f is 15 mm, the total track length TTL is 7.5 mm, and the length of TTL 1 is 5.15 mm. Therefore, the optical lens 10 has good imaging quality and a long focal length (f is relatively large) to achieve a long-range photographing effect, and has a relatively short optical length (both TTL 1 and TTL are relatively small), in other words, the optical lens 10 in this implementation has a relatively short length, so that an electronic device 1000 including the optical lens 10 can have a relatively small thickness.

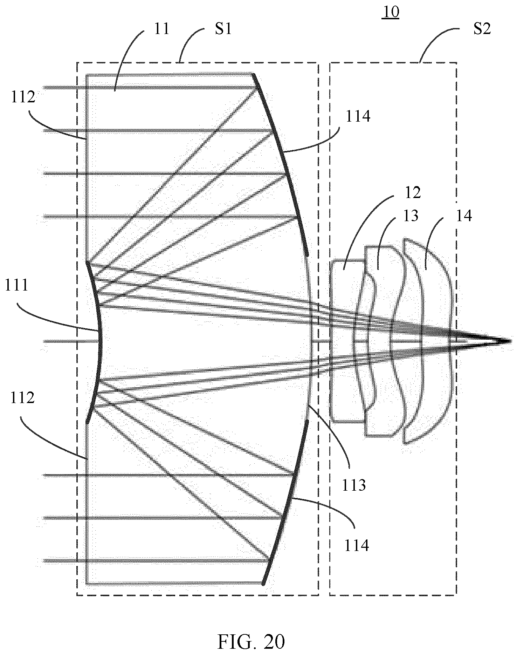

FIG. 20 is a schematic diagram of a structure of an optical lens 10 according to a fourth implementation of this application. In this embodiment, the optical lens 10 includes two components. The two components are respectively a first component S1 and a second component S2. The first component S1 includes a first optical element 11, and the second component S2 includes a second optical element 12, a third optical element 13, and a fourth optical element 14. The first optical element 11, the second optical element 12, the third optical element 13, and the fourth optical element 14 are sequentially disposed from an object side to an image side, and all the optical elements are coaxially disposed. The first optical element 11 is a reflex optical element, and all of the second optical element 12, the third optical element 13, and the fourth optical element 14 are common optical elements.

In this implementation, the first optical element 11 has positive focal power, and all of the second optical element 12, the third optical element 13, and the fourth optical element 14 have negative focal power. All of the first optical element 11, the second optical element 12, the third optical element 13, and the fourth optical element 14 are made of a plastic material, to reduce manufacturing costs of the optical lens 10.

Design parameters in the fourth implementation of this application are shown in Table 13. For meanings of symbols in Table 13, refer to Table 1.

**Table 13 Design parameters of the optical lens 10 in the fourth implementation**

| TTL/EFL | 0.302 | $|f_1/f|$ | 0.548 | $|f_2/f|$ | 0.078 |
|---------|-------|-----------|-------|-----------|-------|
| OBS | 0.32 | IH/EFL | 0.137 | Dmax | 8.5 mm |

Based on the design parameters in Table 13, parameters such as a curvature radius, a thickness, a refractive index, and an Abbe number of each optical element and surface coefficients of an object-side surface and an image-side surface of each optical element need to be correspondingly designed, to implement the design parameters in Table 13. Table 14 shows the parameters such as the curvature radius, the thickness, the refractive index, and the Abbe number of each optical element in the optical lens 10 in this embodiment of this application, and Table 15 shows the surface coefficients of each optical element in the optical lens 10 in this embodiment.

**Table 14 Curvature radius, thickness, refractive index, and Abbe number of each optical element in the optical lens 10 in the fourth implementation**

|  | R | Thickness | | nd | | vd | |
|---|---|---|---|---|---|---|---|
| R1 | Infinity | a1 | 3.995 | n1 | 1.53 | v1 | 56 |
| R2 | -10.415 | a2 | -3.737 | | | | |
| R3 | -3.618 | a3 | 3.737 | | | | |
| R4 | -10.415 | d1 | 0.35 | | | | |
| R5 | 21.205 | d2 | 0.4 | n2 | 1.53 | v2 | 56 |
| R6 | 2.595 | a4 | 0.25 | | | | |
| R7 | 2.370 | d3 | 0.4 | n3 | 1.66 | v3 | 19.2 |
| R8 | 1.733 | a5 | 0.55 | | | | |
| R9 | 3.504 | d4 | 0.5 | n4 | 1.66 | v4 | 19.2 |
| R10 | 2.593 | a6 | 0.646 | | | | |

In the table, R9 represents a curvature radius of an object-side surface of the fourth optical element 14 at a paraxial position, R10 represents a curvature radius of an image-side surface of the fourth optical element 14 at the paraxial position, a6 represents an axial distance between the image-side surface of the third optical element 13 and the object-side surface of the fourth optical element 14, d4 represents an axial thickness of the fourth optical element 14, n4 represents a refractive index of the fourth optical element 14, and v4 represents an Abbe number of the fourth optical element 14. For meanings of other symbols in the table, refer to Table 2.

In this implementation, both the object-side surface and the image-side surface of each optical element in each of the first component S1 and the second component S2 are aspheric surfaces, and the surface coefficients of the optical element are aspheric coefficients. The surface coefficients of each optical element in the optical lens 10 in this embodiment are shown in Table 15.

**Table 15 Aspheric coefficients of the optical lens 10 in the fourth implementation**

|  | Type | K | A2 | A3 | A4 | A5 | A6 | A7 |
|---|---|---|---|---|---|---|---|---|
| R1 | Even aspheric surface | 0.00E+00 | 0 | 0 | 0 | 0 | 0 | 0 |
| R2 | Even aspheric surface | 0.00E+00 | 1.33E-04 | 1.13E-07 | 4.04E-08 | -1.79E-09 | 4.67E-11 | -5.06E-13 |
| R3 | Even aspheric surface | 0.00E+00 | 9.03E-03 | -5.73E-04 | -3.15E-05 | 2.47E-04 | -1.42E-04 | 2.57E-05 |
| R4 | Even aspheric surface | 0.00E+00 | 1.33E-04 | 1.13E-07 | 4.04E-08 | -1.79E-09 | 4.67E-11 | -5.06E-13 |
| R5 | Even aspheric surface | 0.00E+00 | -2.32E-02 | -9.75E-02 | 1.53E-01 | -8.32E-02 | 1.68E-02 | 7.68E-17 |
| R6 | Even aspheric surface | 0.00E+00 | 6.62E-02 | -2.88E-01 | 2.70E-01 | -1.09E-01 | 1.52E-02 | 1.29E-17 |
| R7 | Even aspheric surface | 0.00E+00 | 6.53E-02 | -2.32E-01 | 1.11E-01 | -4.18E-02 | -1.20E-07 | -1.50E-12 |

(continued)

|  | Type | K | A2 | A3 | A4 | A5 | A6 | A7 |
|---|---|---|---|---|---|---|---|---|
| R8 | Even aspheric surface | 0.00E+00 | -1.74E-02 | -1.10E-01 | 4.71E-02 | -9.31E-03 | 2.38E-13 | 2.74E-15 |
| R9 | Even aspheric surface | 0.00E+00 | -2.08E-01 | 4.49E-02 | 1.34E-02 | -4.99E-03 | -8.47E-04 | -3.71E-15 |
| R10 | Even aspheric surface | 0.00E+00 | -2.47E-01 | 9.70E-02 | -3.94E-02 | 9.84E-03 | -1.19E-03 | 5.26E-15 |

Herein, K is a quadric constant, and symbols such as A2, A3, A4, A5, A6, and A7 represent aspheric coefficients.

In this embodiment, surface types of all of the first optical element 11 to the fourth optical element 14 are even aspheric surfaces, and may be defined by using the following aspheric formula:

$$z=\frac{cr^2}{1+\sqrt{1-Kc^2r^2}}+\sum_{i=1}^{N}a_i\rho^i.$$

In this implementation,

$$\sum_{i=1}^{N}a_i\rho^i=A_2r^4+A_3r^6+A_4r^8+A_5r^{10}+A_6r^{12}+A_7r^{14},$$

where

z is a vector height of the aspheric surface, r is a radial coordinate of the aspheric surface, c is vertex curvature of the aspheric surface, K is a quadric constant, and A2, A3, A4, A5, A6, and A7 are aspheric coefficients. Based on the design parameters in Table 14 and Table 15, the optical lens 10 having basic parameters shown in Table 16 is designed, to meet a requirement that the optical lens 10 has relatively good imaging quality, and has a long focal length and a short optical length.

**Table 16 Basic parameters of the optical lens 10 in the fourth implementation**

| Focal length f | 25 mm |
|---|---|
| F-number | 3 |
| Central obscuration ratio OBS | 0.32 |
| Image height IH | 2.06 mm |
| Half FOV | 4.62° |
| BFL | 0.3 mm |
| TTL | 7.5 mm |
| Telephoto ratio | 0.296 |
| Design wavelength | 470 nm-650 nm |

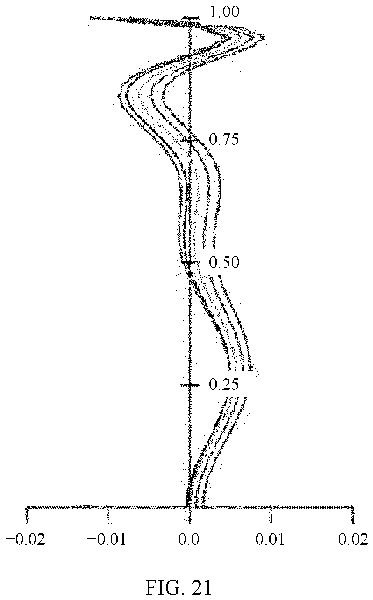

FIG. 21 to FIG. 24 are diagrams representing optical performance of the optical lens 10 in the fourth implementation. Specifically, FIG. 21 is a schematic diagram of axial aberrations that exist after light whose wavelengths are respectively 650 nm, 610 nm, 555 nm, 510 nm, and 470 nm passes through the optical lens 10 in the fourth implementation. In FIG. 21, a vertical coordinate represents a normalized pupil coordinate, and a horizontal coordinate represents an aberration in an axial direction, and is in a unit of millimeter. It may be learned from FIG. 21 that in this embodiment, the axial aberration is controlled within a very small range.

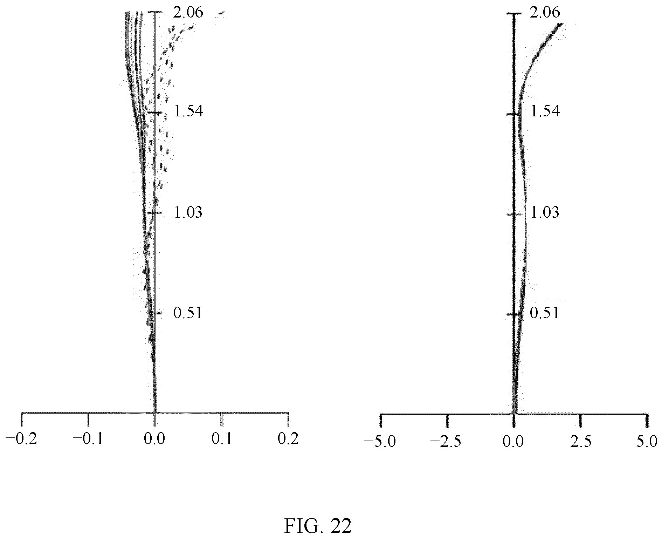

FIG. 22 is a schematic diagram of field curvature and optical distortion that exist after light whose wavelengths are respectively 650 nm, 610 nm, 555 nm, 510 nm, and 470 nm passes through the optical lens 10 in the fourth implementation, and is used to represent a difference between deformation of an image that exists after the light passes through the optical lens 10 and an ideal shape. In a left figure in FIG. 22, a solid line is a schematic diagram of field curvature that is in a meridian direction and that exists after the light whose wavelengths are respectively 650 nm, 610 nm, 555 nm, 510 nm, and 470 nm passes through the optical lens 10, and a dashed line is a schematic diagram of field curvature that is in a sagittal direction and that exists after the light of 555 nm passes through the optical lens 10. A right figure in FIG. 22 is a schematic diagram of optical distortion that exists after the light whose wavelengths are respectively 650 nm, 610 nm, 555 nm, 510 nm, and 470 nm passes through the optical lens 10 in the fourth implementation. It may be learned from the figure that in this embodiment, the field curvature and the distortion are controlled within a visually identifiable range (ranges that are equal to and less than 2% are visually unidentifiable) in an optical system.

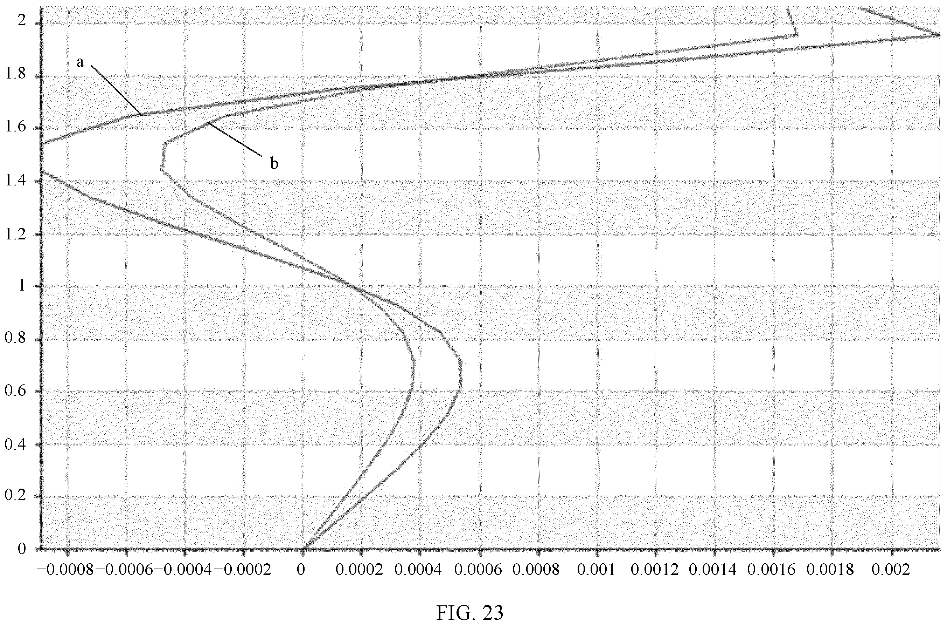

FIG. 23 shows lateral chromatic aberrations that are at different image height positions and that exist after light of different wavelengths passes through the optical lens 10 in the fourth implementation. In FIG. 23, a vertical coordinate represents an actual image height, and is in a unit of millimeter (mm), and a horizontal coordinate represents an imaging deviation, and is in a unit of millimeter (mm). A curve a represents imaging deviations that are at different image height positions and that are between an image that exists after light whose wavelength is 620 nm passes through the optical lens 10 in the first embodiment and an image that exists after light whose wavelength is 470 nm passes through the optical lens 10 in the first embodiment, and a curve b represents imaging deviations that are at different image height positions and that are between an image that exists after light whose wavelength is 550 nm passes through the optical lens 10 in the first embodiment and the image that exists after the light whose wavelength is 470 nm passes through the optical lens 10 in the first embodiment. It may be learned from the figure that there are relatively small imaging deviations at different image height positions between images that exist after light of different bands passes through the optical lens 10 in the first embodiment, in other words, an imaging deviation that exists after light of various wavelengths passes through the optical lens 10 in the first embodiment basically does not affect imaging quality of the optical lens 10.

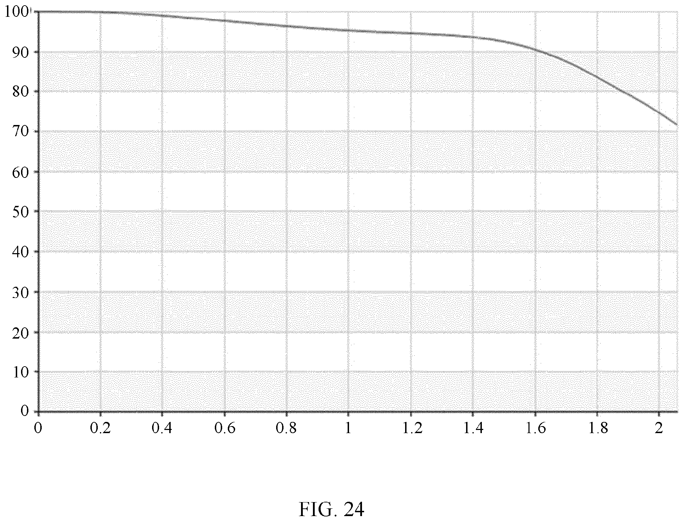

FIG. 24 shows a distribution curve of relative illumination on an image plane of the optical lens 10 in the fourth embodiment. In FIG. 24, a horizontal coordinate represents an actual image height, and is in a unit of millimeter (mm), and a vertical coordinate represents relative illumination, and is in a unit of millimeter (mm). It may be learned from the figure that there is relatively even distribution in different regions on the image plane of the optical lens in this implementation, that is, the optical lens 10 in this implementation can obtain an image with relatively uniform brightness, and therefore a relatively good image can be obtained.

In the optical lens 10 provided in this embodiment, the focal length f is 25 mm, the total track length TTL is 7.5 mm, and the length of TTL 1 is 7.2 mm. Therefore, the optical lens 10 has good imaging quality and a long focal length (f is relatively large) to achieve a long-range photographing effect, and has a relatively short optical length (both TTL 1 and TTL are relatively small), in other words, the optical lens 10 in this implementation has a relatively short length, so that an electronic device 1000 including the optical lens 10 can have a relatively small thickness.

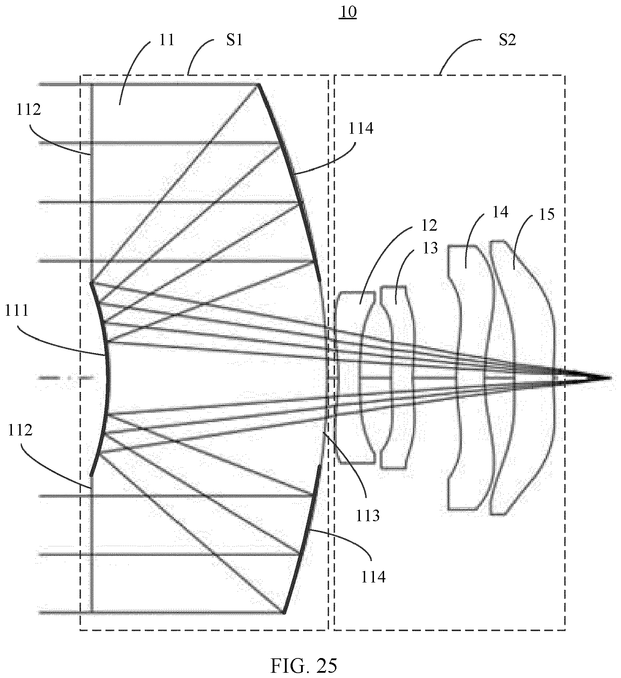

FIG. 25 is a schematic diagram of a structure of an optical lens 10 according to a fifth implementation of this application. In this embodiment, the optical lens 10 includes two components. The two components are respectively a first component S1 and a second component S2. The first component S1 includes a first optical element 11, and the second component S2 includes a second optical element 12, a third optical element 13, a fourth optical element 14, and a fifth optical element 15. The first optical element 11, the second optical element 12, the third optical element 13, the fourth optical element 14, and the fifth optical element 15 are sequentially disposed from an object side to an image side, and all the optical elements are coaxially disposed. The first optical element 11 is a reflex optical element, and all of the second optical element 12, the third optical element 13, the fourth optical element 14, and the fifth optical element 15 are common optical elements.

In this implementation, the first optical element 11 and the fourth optical element 14 have positive focal power, and all of the second optical element 12, the third optical element 13, and the fifth optical element 15 have negative focal power. All of the first optical element 11, the second optical element 12, the third optical element 13, the fourth optical element 14, and the fifth optical element 15 are made of a plastic material, to reduce manufacturing costs of the optical lens 10.

Design parameters in the fifth implementation of this application are shown in Table 17. For meanings of symbols in Table 17, refer to Table 1.

**Table 17 Design parameters of the optical lens 10 in the fifth implementation**

| TTL/EFL | 0.261 | $|f_1/f|$ | 0.606 | $|f_2/f|$ | 0.056 |
|---------|-------|-----------|-------|-----------|-------|
| OBS | 0.28 | IH/EFL | 0.100 | Dmax | 8.5 mm |

Based on the design parameters in Table 17, parameters such as a curvature radius, a thickness, a refractive index, and an Abbe number of each optical element and surface coefficients of an object-side surface and an image-side surface of each optical element need to be correspondingly designed, to implement the design parameters in Table 17. Table 18 shows the parameters such as the curvature radius, the thickness, the refractive index, and the Abbe number of each optical element in the optical lens 10 in this embodiment of this application, and Table 19 shows the surface coefficients of each optical element in the optical lens 10 in this embodiment.

**Table 18 Curvature radius, thickness, refractive index, and Abbe number of each optical element in the optical lens 10 in the fifth implementation**

|  | R | Thickness | | nd | | vd | |
|---|---|---|---|---|---|---|---|
| R1 | -175.328 | a1 | 3.4 | n1 | 1.53 | v1 | 56 |
| R2 | -8.012 | a2 | -3.0 | | | | |
| R3 | -2.383 | a3 | 3.0 | | | | |
| R4 | -8.012 | d1 | 0.167 | | | | |
| R5 | 27.669 | d2 | 0.23 | n2 | 1.48 | v2 | 70 |
| R6 | 3.647 | a4 | 0.247 | | | | |
| R7 | 1.254 | d3 | 0.23 | n3 | 1.75 | v3 | 34 |
| R8 | 1.002 | a5 | 0.242 | | | | |
| R9 | 1.388 | d4 | 0.256 | n4 | 1.56 | v4 | 45.4 |
| R10 | 1.902 | a6 | 1.185 | | | | |
| R11 | -1.530 | d5 | 0.256 | n5 | 1.53 | v5 | 56 |
| R12 | 4.116 | a7 | 0.190 | | | | |

In the table, R11 represents a curvature radius of an object-side surface of the fifth optical element 15 at a paraxial position, R12 represents a curvature radius of an image-side surface of the fifth optical element 15 at the paraxial position, a7 represents an axial distance between the image-side surface of the fifth optical element 15 and the object-side surface of the fifth optical element 15, d5 represents an axial thickness of the fifth optical element 15, n5 represents a refractive index of the fifth optical element 15, and v5 represents an Abbe number of the fifth optical element 15. For meanings of other symbols in the table, refer to Table 14.

In this implementation, both the object-side surface and the image-side surface of each optical element in each of the first component S1 and the second component S2 are aspheric surfaces, and the surface coefficients of the optical element are aspheric coefficients. The surface coefficients of each optical element in the optical lens 10 in this embodiment are shown in Table 19. For meanings of symbols in the table, refer to Table 15.

**Table 19 Aspheric coefficients of the optical lens 10 in the fifth implementation**

|  | Type | K | A2 | A3 | A4 | A5 | A6 | A7 |
|---|---|---|---|---|---|---|---|---|
| R1 | Even aspheric surface | 0.00E+00 | -1.65E-06 | -1.62E-06 | -2.35E-08 | 0.00E+00 | 0.00E+00 | 0.00E+00 |
| R2 | Even aspheric surface | 0.00E+00 | 2.49E-04 | 1.38E-06 | 1.36E-08 | -3.41E-11 | 7.22E-12 | 0.00E+00 |
| R3 | Even aspheric surface | 0.00E+00 | 1.78E-02 | 4.62E-04 | -6.68E-03 | 1.84E-02 | -2.75E-02 | 2.43E-02 |
| R4 | Even aspheric surface | 0.00E+00 | 3.79E-04 | 2.52E-06 | 2.87E-08 | -6.71E-11 | 2.27E-11 | 0.00E+00 |
| R5 | Even aspheric surface | 0.00E+00 | 3.50E-01 | -1.27E+00 | 5.32E+00 | -1.47E+01 | 2.73E+01 | -3.32E+01 |
| R6 | Even aspheric surface | 0.00E+00 | 5.39E-01 | -3.43E+00 | 1.60E+01 | -4.94E+01 | 1.04E+02 | -1.47E+02 |
| R7 | Even | 0.00E+00 | 5.89E-02 | -2.58E+00 | 9.50E+00 | -2.08E+01 | 2.58E+01 | -1.47E+01 |

(continued)

| | Type | K | A2 | A3 | A4 | A5 | A6 | A7 |
|---|---|---|---|---|---|---|---|---|
| | aspheric surface | | | | | | | |
| R8 | Even aspheric surface | -1.00E+00 | -8.18E-02 | -2.61E+00 | 1.25E+01 | -3.36E+01 | 5.61E+01 | -6.00E+01 |
| R9 | Even aspheric surface | 0.00E+00 | -4.48E-01 | -4.09E-01 | 2.82E+00 | -4.65E+00 | 2.48E+00 | 1.69E+00 |
| R10 | Even aspheric surface | 0.00E+00 | -3.22E-01 | -1.15E-01 | 1.77E+00 | -3.79E+00 | 4.27E+00 | -2.91E+00 |
| R11 | Even aspheric surface | -1.00E+00 | -5.82E-01 | 4.30E-01 | 9.82E-01 | -2.59E+00 | 2.68E+00 | -1.49E+00 |
| R12 | Even aspheric surface | 0.00E+00 | -6.08E-01 | 7.67E-01 | -6.15E-01 | 3.22E-01 | -1.21E-01 | 3.47E-02 |

In this embodiment, surface types of all of the first optical element 11 to the fifth optical element 15 are even aspheric surfaces, and may be defined by using the following aspheric formula:

$$z = \frac{cr^2}{1+\sqrt{1-Kc^2r^2}} + \sum_{i=1}^{N} a_i\rho^i .$$

In this implementation,

$$\sum_{i=1}^{N} a_i\rho^i = A_2 r^4 + A_3 r^6 + A_4 r^8 + A_5 r^{10} + A_6 r^{12} + A_7 r^{14},$$

where
z is a vector height of the aspheric surface, r is a radial coordinate of the aspheric surface, c is vertex curvature of the aspheric surface, K is a quadric constant, and A2, A3, A4, A5, A6, and A7 are aspheric coefficients. Based on the design parameters in Table 18 and Table 19, the optical lens 10 having basic parameters shown in Table 20 is designed, to meet a requirement that the optical lens 10 has relatively good imaging quality, and has a long focal length and a short optical length.

**Table 20 Basic parameters of the optical lens 10 in the fifth implementation**

| Focal length f | 27.2 mm |
|---|---|
| F-number | 2.7 |
| Central obscuration ratio OBS | 0.28 |
| Image height IH | 2.70 mm |
| Half FOV | 5.53° |
| BFL | 0.38 mm |
| TTL | 7.1 mm |
| Telephoto ratio | 0.261 |
| Design wavelength | 470 nm-650 nm |

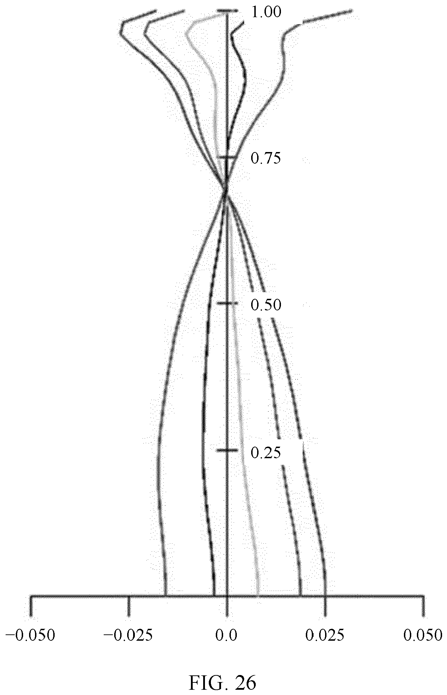

FIG. 26 to FIG. 29 are diagrams representing optical performance of the optical lens 10 in the fifth implementation. Specifically, FIG. 26 is a schematic diagram of axial aberrations that exist after light whose wavelengths are respectively 650 nm, 610 nm, 555 nm, 510 nm, and 470 nm passes through the optical lens 10 in the fifth implementation. In FIG.

26, a vertical coordinate represents a normalized pupil coordinate, and a horizontal coordinate represents an aberration in an axial direction, and is in a unit of millimeter. It may be learned from FIG. 26 that in this embodiment, the axial aberration is controlled within a very small range.

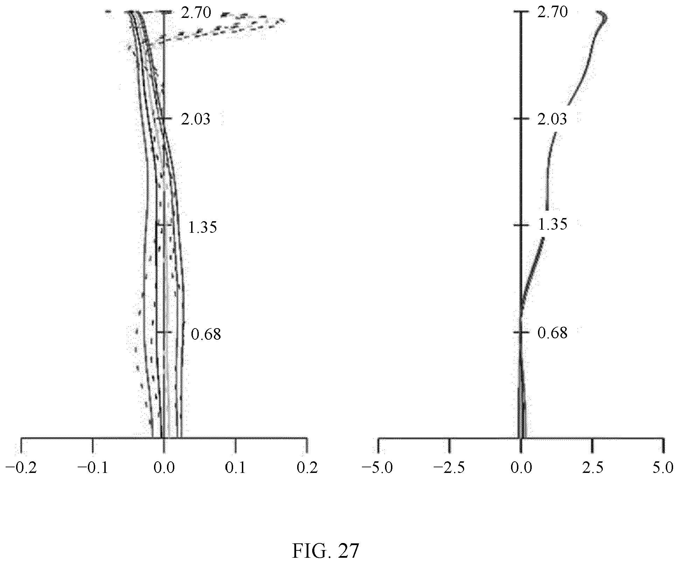

FIG. 27 is a schematic diagram of field curvature and optical distortion that exist after light whose wavelengths are respectively 650 nm, 610 nm, 555 nm, 510 nm, and 470 nm passes through the optical lens 10 in the fifth implementation, and is used to represent a difference between deformation of an image that exists after the light passes through the optical lens 10 and an ideal shape. In a left figure in FIG. 27, a solid line is a schematic diagram of field curvature that is in a meridian direction and that exists after the light whose wavelengths are respectively 650 nm, 610 nm, 555 nm, 510 nm, and 470 nm passes through the optical lens 10, and a dashed line is a schematic diagram of field curvature that is in a sagittal direction and that exists after the light whose wavelengths are respectively 650 nm, 610 nm, 555 nm, 510 nm, and 470 nm passes through the optical lens 10. A right figure in FIG. 27 is a schematic diagram of optical distortion that exists after the light whose wavelengths are respectively 650 nm, 610 nm, 555 nm, 510 nm, and 470 nm passes through the optical lens 10 in the fifth implementation. It may be learned from the figure that in this embodiment, the field curvature and the distortion are controlled within a visually identifiable range (ranges that are equal to and less than 2% are visually unidentifiable) in an optical system.

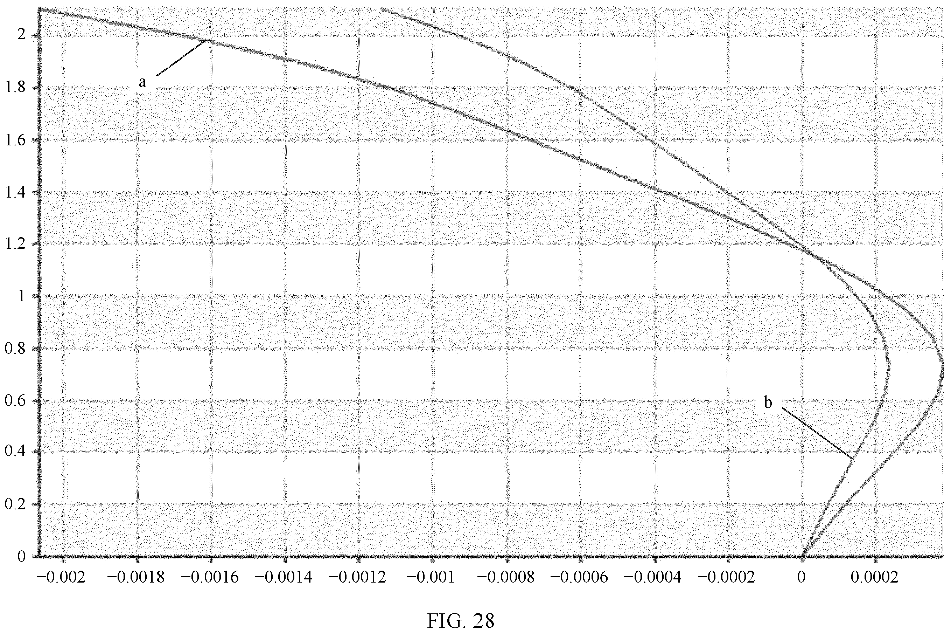

FIG. 28 is a schematic diagram of lateral chromatic aberrations that are at different image height positions and that exist after light of different wavelengths passes through the optical lens 10 in the fifth implementation. In FIG. 28, a vertical coordinate represents an actual image height, and is in a unit of millimeter (mm), and a horizontal coordinate represents an imaging deviation, and is in a unit of millimeter (mm). A curve a represents imaging deviations that are at different image height positions and that are between an image that exists after light whose wavelength is 620 nm passes through the optical lens 10 in the first embodiment and an image that exists after light whose wavelength is 470 nm passes through the optical lens 10 in the first embodiment, and a curve b represents imaging deviations that are at different image height positions and that are between an image that exists after light whose wavelength is 550 nm passes through the optical lens 10 in the first embodiment and the image that exists after the light whose wavelength is 470 nm passes through the optical lens 10 in the first embodiment. It may be learned from the figure that there are relatively small imaging deviations at different image height positions between images that exist after light of different bands passes through the optical lens 10 in the first embodiment, in other words, an imaging deviation that exists after light of various wavelengths passes through the optical lens 10 in the first embodiment basically does not affect imaging quality of the optical lens 10.

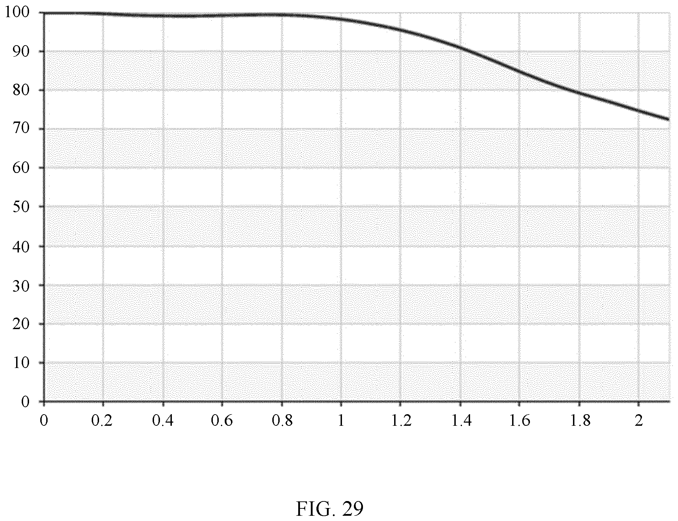

FIG. 29 shows a distribution curve of relative illumination on an image plane of the optical lens 10 in the fifth embodiment. In FIG. 29, a horizontal coordinate represents an actual image height, and is in a unit of millimeter (mm), and a vertical coordinate represents relative illumination, and is in a unit of millimeter (mm). It may be learned from the figure that there is relatively even distribution in different regions on the image plane of the optical lens in this implementation, that is, the optical lens 10 in this implementation can obtain an image with relatively uniform brightness, and therefore a relatively good image can be obtained.

In the optical lens 10 provided in this embodiment, the focal length f is 27.2 mm, the total track length TTL is 7.1 mm, and the length of TTL 1 is 6.72 mm. Therefore, the optical lens 10 has good imaging quality and a long focal length (f is relatively large) to achieve a long-range photographing effect, and has a relatively short optical length (both TTL 1 and TTL are relatively small), in other words, the optical lens 10 in this implementation has a relatively short length, so that an electronic device 1000 including the optical lens 10 can have a relatively small thickness.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. An optical lens, comprising a plurality of components, wherein the plurality of components comprise a first component and a second component arranged from an object side to an image side, the first component has positive focal power, the second component has negative focal power, each component comprises at least one optical element, each optical element comprises an object-side surface facing the object side and an image-side surface facing the image side, one optical element in the first component is a reflex optical element, light is reflected in the reflex optical element for several times, all optical elements in the second component are transmissive optical elements, and the optical lens meets the following relational expression:

$025 \leq TTL/EFL \leq 0.5$, wherein
TTL is a total track length of the optical lens, and EFL is an effective focal length of the optical lens.

**2.** The optical lens according to claim 1, wherein the optical lens meets the following relational expression:

$0.3 \leq |f_1/f| \leq 0.8$, wherein
$f_1$ is a focal length of the first component, and f is a total focal length of the optical lens.

**3.** The optical lens according to claim 1 or 2, wherein an object-side surface of the reflex optical element comprises a first reflection region and a first transmission region disposed around the first reflection region, an image-side surface comprises a second transmission region and a second reflection region surrounding the second transmission region, a projection of the first transmission region on the image-side surface in an optical axis direction is located in the second reflection region, and light is incident through the first transmission region, then reflected in the second reflection region and reflected in the first reflection region, and then emitted from the second transmission region.

**4.** The optical lens according to claim 3, wherein the first reflection region is a concave freeform surface bent towards the second emission region, and both the second reflection region and the second transmission region are convex freeform surfaces protruding in a direction away from the first reflection region.

**5.** The optical lens according to claim 3, wherein the optical lens meets the following relational expression:

$0.25 \leq OBS \leq 0.5$, wherein
OBS is a ratio of a diameter of the first reflection region to a diameter of the object-side surface of the reflex optical element.

**6.** The optical lens according to claim 1, wherein the second component comprises at least two optical elements, and both an object-side surface and an image-side surface of each optical element in the second component are aspheric surfaces.

**7.** The optical lens according to claim 1, wherein a diameter of an optical element with a largest diameter in the optical lens ranges from 7 mm to 10 mm.

**8.** The optical lens according to claim 1, wherein the optical lens meets the following relational expression:

$0.05 \leq IH/EFL \leq 0.15$, wherein
IH is a maximum image height of the optical lens, and EFL is the effective focal length of the optical lens.

**9.** A camera module, comprising a photosensitive element and the optical lens according to any one of claims 1 to 8, wherein the photosensitive element is located on an image side of the optical lens, and is located on a focal plane of the optical lens.

**10.** An electronic device, comprising a housing and the camera module according to claim 9, wherein the lens module is disposed in the housing, and an optical axis of the camera module is the same as a thickness direction of the electronic device.

FIG. 1

FIG. 2

EP 4 148 479 A1

FIG. 3a

31

FIG. 3b

FIG. 4

FIG. 5

FIG. 6

FIG. 7

FIG. 8

FIG. 9

FIG. 10

FIG. 11

FIG. 12

FIG. 13

EP 4 148 479 A1

FIG. 14

FIG. 15

FIG. 16

FIG. 17

FIG. 18

FIG. 19

FIG. 20

FIG. 21

FIG. 22

FIG. 23

FIG. 24

FIG. 25

FIG. 26

FIG. 27

FIG. 28

FIG. 29

## INTERNATIONAL SEARCH REPORT

| International application No. |
| --- |
| **PCT/CN2021/095889** |

**A. CLASSIFICATION OF SUBJECT MATTER**

G02B 13/00(2006.01)i; G02B 17/08(2006.01)i

According to International Patent Classification (IPC) or to both national classification and IPC

**B. FIELDS SEARCHED**

Minimum documentation searched (classification system followed by classification symbols)

G02B

Documentation searched other than minimum documentation to the extent that such documents are included in the fields searched

Electronic data base consulted during the international search (name of data base and, where practicable, search terms used)

CNABS, VEN, CNTXT, CNKI, WOTXT, USTXT, EPTXT: 镜头, 透镜, 折返, 反射, 折反, 总长, 薄, lens, catadioptric, fold +, reflect+, total, length, +thin+

**C. DOCUMENTS CONSIDERED TO BE RELEVANT**

| Category* | Citation of document, with indication, where appropriate, of the relevant passages | Relevant to claim No. |
| --- | --- | --- |
| PX | CN 111679397 A (AAC COMMUNICATIONS TECHNOLOGY (CHANGZHOU) CO., LTD.) 18 September 2020 (2020-09-18) description, paragraphs 69-246, figures 1-12 | 1, 3-10 |
| X | CN 207148403 U (ZHEJIANG SUNNY OPTICS CO., LTD.) 27 March 2018 (2018-03-27) description paragraphs 96-115, figures 5-6C | 1-10 |
| X | CN 101581828 A (SOOCHOW UNIVERSITY) 18 November 2009 (2009-11-18) description page 3 line 7 - page 5 line 29, figures 1-5 | 1, 3, 4, 6-10 |
| X | CN 110908077 A (AAC MICROTECH (CHANGZHOU) CO., LTD.) 24 March 2020 (2020-03-24) description, paragraphs 26-64, figures 1-14 | 1, 3-10 |
| A | CN 108254859 A (ZHISHENG K. K.) 06 July 2018 (2018-07-06) entire document | 1-10 |
| A | CN 102866488 A (SONY CORPORATION) 09 January 2013 (2013-01-09) entire document | 1-10 |
| A | US 5089910 A (LOOKHEED MISSILES & SPACE COMPANY, INC.) 18 February 1992 (1992-02-18) entire document | 1-10 |

☑ Further documents are listed in the continuation of Box C.  ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **23 August 2021** | **30 August 2021** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

## INTERNATIONAL SEARCH REPORT

International application No.

**PCT/CN2021/095889**

**C.    DOCUMENTS CONSIDERED TO BE RELEVANT**

| Category* | Citation of document, with indication, where appropriate, of the relevant passages | Relevant to claim No. |
|---|---|---|
| A | CN 107209353 A (SAMSUNG ELECTRONICS CO., LTD.) 26 September 2017 (2017-09-26) entire document | 1-10 |

Form PCT/ISA/210 (second sheet) (January 2015)

**EP 4 148 479 A1**

| INTERNATIONAL SEARCH REPORT<br>Information on patent family members | | | | International application No.<br><br>**PCT/CN2021/095889** | | | |
|---|---|---|---|---|---|---|---|
| Patent document<br>cited in search report | | | Publication date<br>(day/month/year) | Patent family member(s) | | | Publication date<br>(day/month/year) |
| CN | 111679397 | A | 18 September 2020 | None | | | |
| CN | 207148403 | U | 27 March 2018 | CN | 107436485 | A | 05 December 2017 |
| | | | | US | 2019187446 | A1 | 20 June 2019 |
| | | | | WO | 2019056817 | A1 | 28 March 2019 |
| | | | | IN | 201927005338 | A | 20 December 2019 |
| CN | 101581828 | A | 18 November 2009 | CN | 101581828 | B | 22 June 2011 |
| CN | 110908077 | A | 24 March 2020 | CN | 111830684 | A | 27 October 2020 |
| | | | | WO | 2021114782 | A1 | 17 June 2021 |
| CN | 108254859 | A | 06 July 2018 | JP | 2018109673 | A | 12 July 2018 |
| CN | 102866488 | A | 09 January 2013 | US | 8896938 | B2 | 25 November 2014 |
| | | | | JP | 2013015712 | A | 24 January 2013 |
| | | | | US | 2013010180 | A1 | 10 January 2013 |
| US | 5089910 | A | 18 February 1992 | None | | | |
| CN | 107209353 | A | 26 September 2017 | EP | 3249439 | A4 | 03 January 2018 |
| | | | | US | 2018024336 | A1 | 25 January 2018 |
| | | | | JP | 2018503131 | A | 01 February 2018 |
| | | | | US | 10146034 | B2 | 04 December 2018 |
| | | | | WO | 2016117821 | A1 | 28 July 2016 |
| | | | | KR | 20160091085 | A | 02 August 2016 |
| | | | | EP | 3249439 | A1 | 29 November 2017 |
| | | | | IN | 201717027253 | A | 29 September 2017 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010482151